# EUROPEAN PATENT SPECIFICATION

(11) **EP 0 981 120 B1**
(45) Date of publication and mention of the grant of the patent: **21.03.2007**
(21) Application number: 98309782.5
(22) Date of filing: 30.11.1998
(51) Int. Cl.: G07F 17/42

(54) **Passport transaction apparatus, passport transaction method, and passport transaction system**
Vorrichtung und Verfahren zur Ausgabe eines Reisepasses
Dispositif et méthode pour la fabrication d'un passeport

(30) Priority: 23.07.1998 JP 20788598
(43) Date of publication of application: 23.02.2000
(73) Proprietor: FUJITSU LIMITED, Kawasaki-shi, Kanagawa 211-8588 (JP)
(72) Inventor: Saito, Hiroyuki, c/o Fujitsu Terminal Systems Ltd., Maebashi, Gunma 371-0855 (JP); Nagumo, Tomoe, c/o Fujitsu Terminal Systems Ltd., Maebashi, Gunma 371-0855 (JP); Mori, Katsuyoshi, c/o Fujitsu Terminal Systems Ltd, Maebashi,gunma 371-0855 (JP)
(74) Representative: Hitching, Peter Matthew

(56) References cited:
- WO-A-97/04353
- JP-A- 3 171 255
- US-A- 5 717 776

## Description

The present invention relates to a passport transaction apparatus, a passport transaction method and a passport transaction system for processing a passport right from its application to its issuance in batch.

Nowadays in Japan, 10 million or more people go abroad on business or for vacation every year, and this situation is called as borderless society. To go abroad, each person is required to have a passport, and to apply for a passport, it is necessary to get certificates (resident card, a copy (an abstract) of the resident's census register) directly or by mailing from a local government office.

When applying for a passport, an applicant is required to file his own photograph, and some document for identifying himself (such as a driver's license). A photograph can easily be taken, for instance, at a passport center, or at a photographer's shop.

When the certificates and the photograph are ready, an application for a passport is made at a passport center. When issuance of the passport is permitted, the passport office sends a postcard which is exchangeable with a passport. Therefore, the applicant has to go again to the passport center carrying the passport and a seal to identify the applicant in order to receive the passport.

In recent years, the passport centers have been opened at many places and an applicant can submit a necessary application at any passport center which is easily accessible, and thus, convenience in obtaining a passport has substantially been improved. However, to obtain the certificates for passport application, still the applicant must go to facilities other than the passport center as ever. Thus, a long time and efforts are required for passport transaction, which is troublesome for businessmen who have little free time or old or handicapped people who are socially disadvantaged. There is a strong social need for simplification of passport transaction. In a related field, US 5,717,776 discloses an apparatus for providing a certification card with an identification photo. The certification card is suitable as a driver's license and the apparatus enables automated license renewal.

It is desirable to solve the problems described above and to make it possible to execute transactions right from passport application up to its issuance more quickly by simplifying passport transactions and to provide a passport transaction apparatus, a passport transaction method, and a passport transaction system not requiring any troublesome efforts for an application for a passport.

The invention is defined in the independent claims, to which reference should now be made. Preferred features are detailed in the sub-claims.

Reference will now be made, by way of example, to the drawings, in which:
Fig. 1 is a block diagram showing one example of a passport transaction system according to Embodiment 1 of the present invention;
Fig. 2 is an external appearance view showing one example of external appearance of the passport transaction apparatus according to Embodiment 1;
Fig. 3 is a block diagram showing one example of configuration of the passport transaction apparatus according to Embodiment 1;
Fig. 4 is a view showing how the data is managed at a passport center according to Embodiment 1;
Figs. 5A to 5D are views showing a sequence of operations when applying for a new passport according to Embodiment 1;
Figs. 6A and 6B are views showing a sequence of operations when applying for a new passport according to Embodiment 1;
Figs. 7A and 7B are views showing a sequence of operations when applying for a new passport according to Embodiment 1;
Figs. 8A to 8C are views showing a sequence for operations when applying for a pew passport according to Embodiment 1;
Figs. 9A to 9D are views showing a sequence of operations when applying for a new passport according to Embodiment 1;
Figs. 10A to 10C are views showing a sequence of operations when applying for a new passport according to Embodiment 1;
Figs. 11A to 11C are views showing a sequence of operations when applying for a passport according to Embodiment 1;
Figs. 12A and 12B are views showing a sequence of operations when applying for a new passport according to Embodiment 1;
Fig. 13 is a flow chart showing a general flow of operations according to Embodiment 1;
Fig. 14 is a flow chart showing operations for processing an application of a new passport according to Embodiment 1;
Fig. 15 is a flow chart showing operations for processing an application for a new passport according to Embodiment 1;
Fig. 16 is a flow chart showing operations for processing an application of a new passport according to Embodiment 1;
Figs. 17A to 17D are views showing a sequence of operations for reissuing a passport according to Embodiment 1;
Figs. 18A and 18B are views showing a sequence of operations for reissuing a passport according to Embodiment 1;
Figs. 19A to 19C are views showing a sequence of operations for reissuing a passport according to Embodiment 1;
Figs. 20A to 20D are views showing a sequence of operations for reissuing a passport according to Embodiment 1;
Figs. 21A to 21C are views showing a sequence of operations for reissuing a passport according to Embodiment 1 ;
Fig. 22 is a flow chart showing the processing for reissuing a passport according to Embodiment 1;
Figs. 23A to 23D are views showing a sequence of operations for receiving a passport according to Embodiment 1;
Figs. 24A and 24B are views showing a sequence of operations for receiving a passport according to Embodiment 1;
Figs. 25A to 25C are views showing a sequence of operations for receiving a passport according to Embodiment 1;
Fig. 26 is a flow chart showing the processing for receiving a passport according to Embodiment 1;
Fig. 27 is a flow chart showing the processing for receiving a passport according to Embodiment 1;
Fig. 28 is a view showing a variant of a method of storing a photograph and a signature for a passport in Embodiment 1;
Figs. 29A to 29D are views showing a sequence of operations for applying a new passport according to Embodiment 2;
Fig. 30 is a flow chart showing operations for processing an application for a new passport according to Embodiment 2;
Fig. 31 is a flow chart showing operations for processing an application for a new passport according to Embodiment 2;
Figs. 32A to 32D are views showing a sequence of operations for reissuing a passport according to Embodiment 2;
Figs. 33A to 33D are views showing a sequence of operations when receiving a passport according to Embodiment 2;
Fig. 34 is a flow chart showing operations when receiving a passport according to Embodiment 2;
Fig. 35 is a block diagram showing an example of a passport transaction system according to Embodiment 3 of the present invention;
Fig. 36 is a flow chart showing operations for processing an application of a new passport according to Embodiment 3;
Fig. 37 is a flow chart showing the processing for reissuing a passport according to Embodiment 3;
Fig. 38 is a flow chart showing the processing for receiving a passport according to Embodiment 3; and
Fig. 39 is a view showing how the data is stored in an IC card according to Embodiment 4 of the present invention.

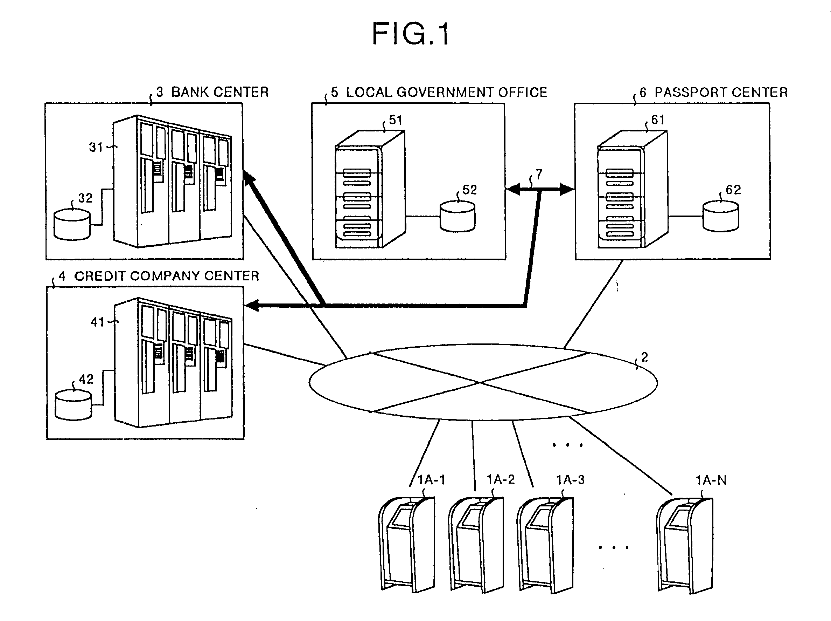

First, a passport transaction system according to Embodiment 1 of the present invention is described. Fig. 1 shows an example of configuration of the passport transaction system according to Embodiment 1 of the present invention. This passport transaction system comprises, a bank center 3, a credit company center 4, a local government office 5, a passport center 6 and passport transaction apparatuses 1A-1 to 1A-N (N: Natural number) connected to a network 2.

The bank center 3 comprises a host device 31 and a customer database 32 for constructing a database under control by the host device 31 (described as customer DB hereinafter). This bank center 3 executes, in addition to the ordinary work done in a bank, such operations as authorization of drawing money requested from each of the passport transaction apparatuses 1A-1 to 1A-N through the network 2 using the customer DB 32 and returns a result of authorization. The customer DB 32 is constructed with the data registered at the bank center 3.

The credit company center 4 comprises a host device 41 and a customer DB 42 for constructing a database under control by this host device 41. This credit company center 4 executes, in addition to ordinary credit jobs, such operations as authorization of drawing of money with a card requested from the passport transaction apparatuses 1A-1 to 1A-N through the network 2 using the customer DB 42 and returns a result of authorization. The customer DB 42 is constructed with the data registered at the credit company center 4.

The local government office 5 comprises a host device 51 and a customer DB 52 for constructing a database under control by this host device 51, and the host device 51 is connected via the communication line 7 to a host device 61 at the passport center 6. This local government office 5, in addition to ordinary work done in the local government office, transmits data from the customer DB 52 through the communication line 7 in response to a request from the passport center 6. The customer BD 52 is constructed with the data registered in the local government office 5. Resident certificates or copies (abstracts) of censor register required for identifying passport applicants are registered in the customer DB 52.

The passport center 6 comprises a host device 61 and a customer DB 62 for constructing a database under control by this host device 61. This passport center 6 executes, in addition to ordinary work like examination of passport applications, examination of passport applications requested from the passport transaction apparatuses 1A-1 to 1A-N through the network 2 using the customer DB 62 and returns a result of the examination

When a passport application is examined, the passport center 6 communicates through the line 7 with the host device 51 at the local government office 5 and fetches such certificates as a resident certificate or a copy of censor register (abstract thereof) in the form of electronic data from the customer DB 52.

The line 7 connects the local government office 5 (host device 51) not only to the passport 6 (host device 61) but also to the bank center 3 (host device 31) and to the credit company center 4 (host device 41). Thus, the passport center 6 can accesses the host device 31 at the bank center 3 and the host device 41 at the credit company center 4 to fetch various types of authorization from each database.

The passport transaction apparatuses 1A-1 to 1A-N are installed for instance, at public facilities such as public halls, stations, and buildings or at convenience stores, and execute passport transactions. The passport transaction apparatuses 1A-1 to 1A-N receive a result of examination for passport application at the passport center 6 through the network 2, and issues a passport on the spot when the application is allowed. The procedure for issuance of a passport includes the procedure for issuing a new passport, the procedure for re-issuing a passport, and the procedure for later acceptance of a passport by the applicant; and also includes procedure for issuing such certificates as a resident certificate, or a copy of censor register (abstract thereof).

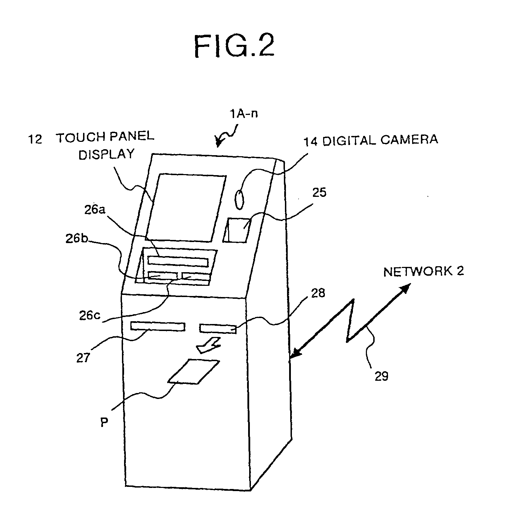

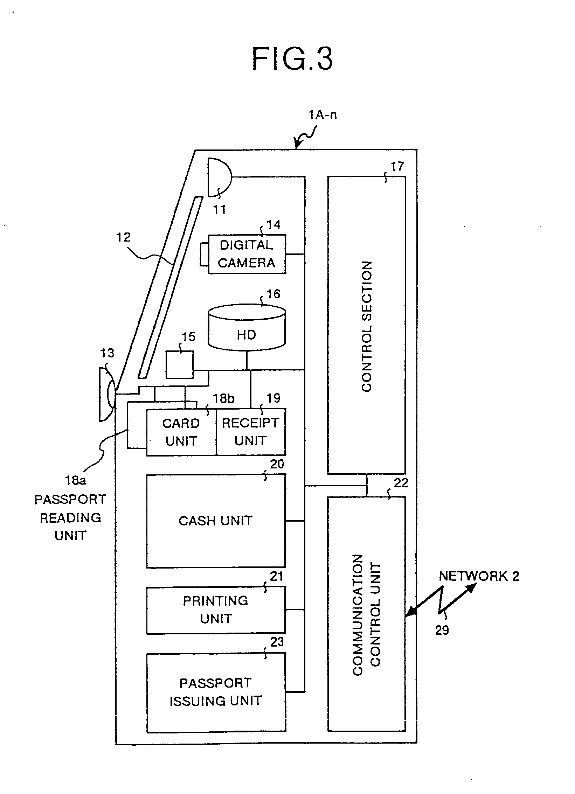

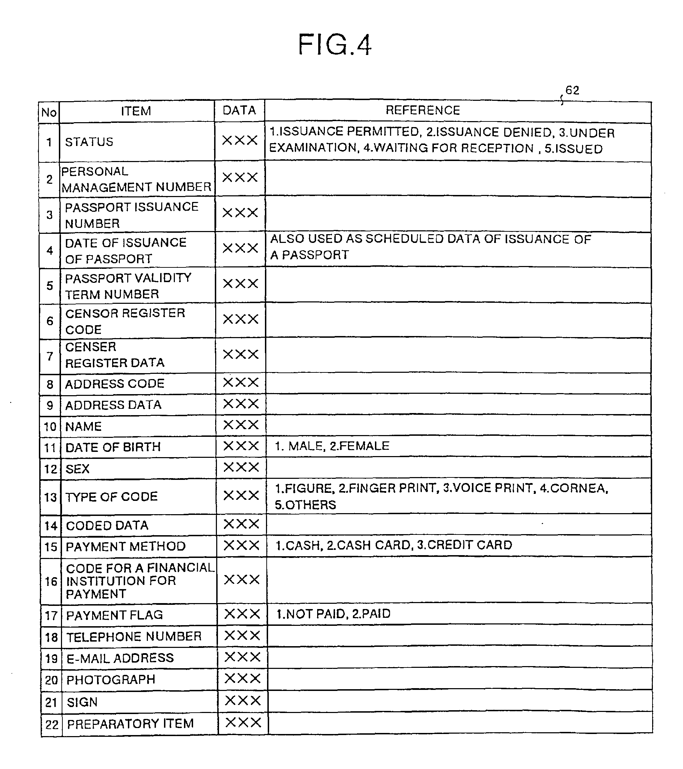

External form of the passport transaction apparatuses 1A-1 to 1A-N is explained. Fig. 2 is a view showing external appearance of a passport transaction apparatus according to Embodiment 1 of the present invention. In Fig. 2, a passport transaction apparatus 1A-n (n: Natural number, 1 ≦ n ≦ N) has a box-like form.

This passport transaction apparatus 1A-n has an inclined top surface inclined downward from the rear side to the front side, a touch panel display 12, a digital camera 14, a passport insertion port 26a, a card insertion port 26b, a receipt issuing port 26c, a cash inlet or outlet port 25 or the like are provided on the upper surface.

The touch panel display 12 is a unit for promoting procedure for passport transaction by touching a display screen thereof. The digital camera 14 is for monitoring applicants from a remote site (for example passport center 6) or for taking a photograph for the passport.

The passport insertion port 26a is for inserting an old passport in order to reissue a passport. The card insertion port 26b is for inserting therein a card of a financial institution such as a credit company or for inserting an IC card.

The receipt issuing port 26c is for issuing a memo or a receipt when issuing a passport. A number is printed on the memo when the passport is to be received on a later day. The Cash inlet/outlet port 25 is not for paying money with a card, but for paying a charge for issuance of a passport or a certificate in cash.

The passport transacting device 1A-n has a certificate issuing port 27 for issuing various types of printed materials such as a resident certificate or a copy of censor register (abstract thereof) and a passport issuing port 28 for issuing a passport P therefrom or the like provided on the front surface.

A communication line 29 is provided in the lower section of the rear surface which connects the passport transaction device 1A-n to the network 2.

Internal configuration of the passport transaction apparatus 1A-n is explained. Fig. 3 is a block diagram showing one example of configuration of the passport transaction apparatus. The passport transaction apparatus 1A-n comprises, a speaker 11, a touch panel display 12, an autophone 13, a digital camera 14, a floppy disk deck 15, a hard disk (indicated by HD in the figure) 16, a control section 17, a passport reading unit 18a, a card unit 18b, a receipt unit 19, a cash unit 20, a printing unit 21, a communication control unit 22, a passport in issuing unit 23 and a communication line 29.

The speaker 11 outputs a voice guidance for procedure of passport transaction previously registered therein. The touch panel display 12 displays, as described above, an operational screen and is used in operations for passport transaction by means of touch system according to instructions provided on the operational screen. This touch panel display 12 is also used when an applicant for a passport manually makes a signature for identification of the applicant.

The autophone 13 is used when a customer does not understand how to manipulate the passport transaction apparatus or when a trouble occurs in the passport transaction apparatus . The autophone 13 is also used when inquiring something to the passport center 6. The digital camera 14 is, as described above, used for monitoring an applicant, or for taking a photograph for passport. The floppy disk deck 15 stores therein data to be provided to the hard disk 16. A floppy disk inserted into this floppy disk deck 15 can freely be set therein or removed therefrom, so that contents of the hard disk 16 can be updated according to the necessity.

The hard disk 16 is a large-scale memory for storing the program for controlling operations of a passport transaction apparatus as a whole, and with various types of data for execution of the program. The program stored in this hard disk 16 can be rewritten by an updated program stored in a floppy disk set in the floppy disk deck 15 or an updated program received via the communication control unit 22 from the network 2. Updating of the program is executed under specified security and illegal operation by a third party are not allowed.

The control unit 17 is a unit for control of operations of a passport transaction apparatus as a whole, and executes procedure for passport transaction or the like according to a program stored, for instance in the hard disk 16. The passport reading unit 18a obtains an image of the contents of the passport fetched from the passport insertion port 26a as an image, and outputs the image data to the control section 17.

The card unit 18b is a unit for indirectly processing the payment, read a card fetched through the card insertion port 26b and outputs the read data to the control section 17. By using a card, such operation as drawing money from an account or clearance of credit can be executed. The receipt unit 19 outputs a memo or a receipt after completion of passport transaction from the receipt issuing port 26c.

The cash unit 20 is a unit for directly processing the payment, and processes for paying or receiving bills and coins, and also plays a role as a safe for bills and coins. Herein operations requiring payment of money includes payment of a charge for issuance of a passport, or a charge for issuance of such certificates as a resident certificate or a copy of censor register (an abstract thereof). The printing unit 21 is a unit for printing a resident certificate or a copy of censor register (or an abstract thereof).

The communication control unit 22 controls communications with the host device 61 at the passport center 6, host device 31 at the bank center 3, or the host device 41 at the credit company center 4 through the network 2. The passport issuing unit 23 prepares a passport by executing operations required when issuing a passport such as pasting of a photograph, and printing of necessary items and a signature, and outputs the passport from the passport issuing port 28. The line 29 is connected to the network 2 and executes data transfer to and from the network 2.

A method of managing personal data at the passport center 6 is explained. Fig. 4 is a view showing a data managing method at a passport center according to Embodiment 1 of the present invention. At the passport center 6, personal data is managed in a personal DB 62 connected to the host device 61 there. Data for 22 items is stored in this personal DB 62 as shown in Fig. 4. Items No.1 to No. 22 include, for instance, a status, a personal management number, a passport issuance number, date of issuance of a passport, a passport validity term number, applicant's censor register code, applicant's censor register data, address code, address data, name, date of birth, sex, type of code, coded data, payment method, paying financial institution code, payment flag, telephone number, E-mail address, a photograph, signature and preparatory data.

The status is data indicating, with a flag, any of the following conditions: (1) issuance permitted, (2) issuance inhibited, (3) under examination, (4) waiting for receiving a result of examination and (5) Issuance of a passport. The personal management number is a number for identifying an applicant. The passport issuance number is a serial number given to each passport in the order of issuance date. The date of issuance indicates a date of issuance of a passport. The passport validity term number indicates a validity term number of an issued passport.

The censor register code indicates a code for domicile registered by an applicant for a passport. The censor register data indicates the applicant' s domicile data. The address code indicates a code for an address where the applicant lives. The address data indicates an address of the applicant. The name indicates the applicant's name. The date of birth indicates a date (year, month and day) of the applicant. The sex indicates whether the applicant is male or female.

The type of code indicates a technology for identifying an applicant such as a figure such as PIN (Personal Identification Number), a finger print, a voice, or cornea pattern. The coded data indicates a data corresponding to any of the types described above. The payment method indicates whether the payment is to be made by cash, a cash card or by a credit card. The paying financial institution code indicates code identifying a financial institution where payment is made with a credit cash or a cash card. The payment flag is a flag indicating whether payment has been made or not.

The telephone number indicates the applicant's telephone number. The E-mail address indicates the applicant's E-mail address. The photograph is an image data obtained by photographing the applicant at the passport transaction apparatus 1A-n. The signature is a sign data obtained when the applicant makes a signature at the passport transaction apparatus 1A-n. The preparatory data is a column provided so that management data can be added later, and the item name, or a number of preparatory items can arbitrarily be set. Each of the above items is updated when application for a passport is made at any of the passport transaction apparatuses 1A-1 to 1A-N.

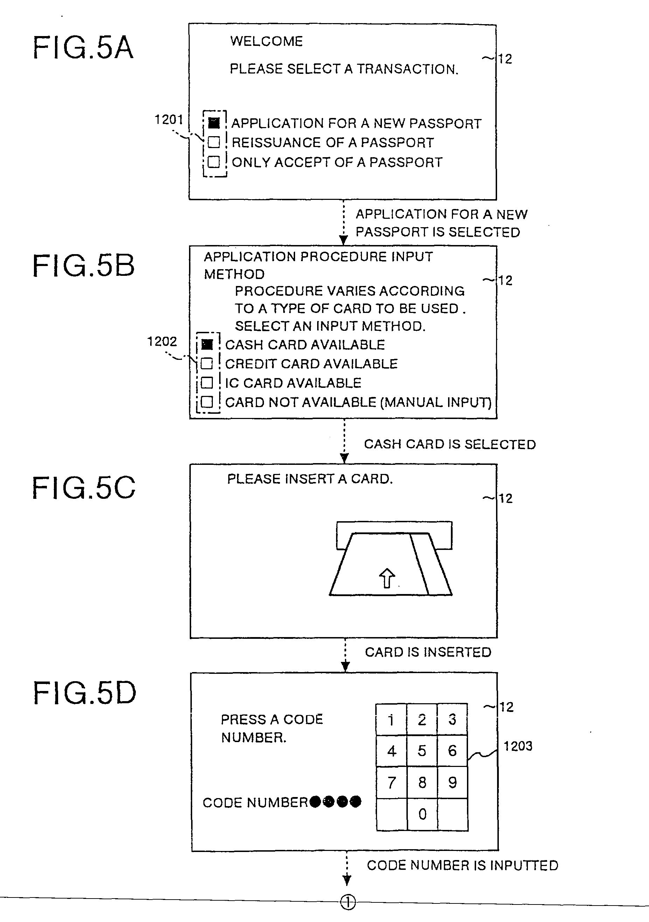

A sequence of operations for applying for a new passport is explained. Fig. 5A to Fig. 14 show the sequence of operations for applying for a new passport. It is assumed in the following description that the touch panel display 12 is used.

A screen for choice of application procedure is provided initially. The initial screen displays the following three items for choice: "Application for a new passport", "Application for reissuance of a passport" and "Only accept a passport" (Fig. 5A). Any of these items can be selected by touching a corresponding transaction selection area 1201.

When an applicant touches a section of "Application for a new passport" in the transaction selection area, the procedure progresses according to the guidance of "Application for a new passport" displayed thereon. When an applicant touches the section for "Application for reissuance of a passport", the procedure progresses according to the guidance of "Application for reissuance of a passport" displayed thereon. When an applicant touches the section of "Only accept a passport", the procedure progresses according to the guidance of "Only accept a passport".

When the "Application for a new passport" is selected in the above step, the display screen is switched to an operation screen for applying for a new passport. Namely, the operation screen displays the 4 types of procedure; "Cash card avail able", "Credit card available", "IC card available" and "Card not available (Manual input)" in a procedure selection area 1202 (Fig. 5B).

When the applicant touches the "Manual input" icon in the procedure selection area 1202, the applicant manually inputs the applicant's name, address, telephone number, date of birth as information for the applicant on the screen. In this case, hiragana or katakana (Japanese characters), numbers from 0 to 9, and alphabets are displayed on the touch panel display 12, and the applicant can select any character and number by touching the corresponding section on the screen.

When the applicant touches the "Cash card available" icon, a message of "Please insert a card" is displayed as the next procedure on the display screen (Fig. 5C). When a card is set in the card insertion port 26b, the screen further switches to a screen for inputting a code number (Fig. 5D). Then a number input area 1203 is formed on the display screen, and the applicant inputs the code number by touching necessary numbers within the number input area 1203.

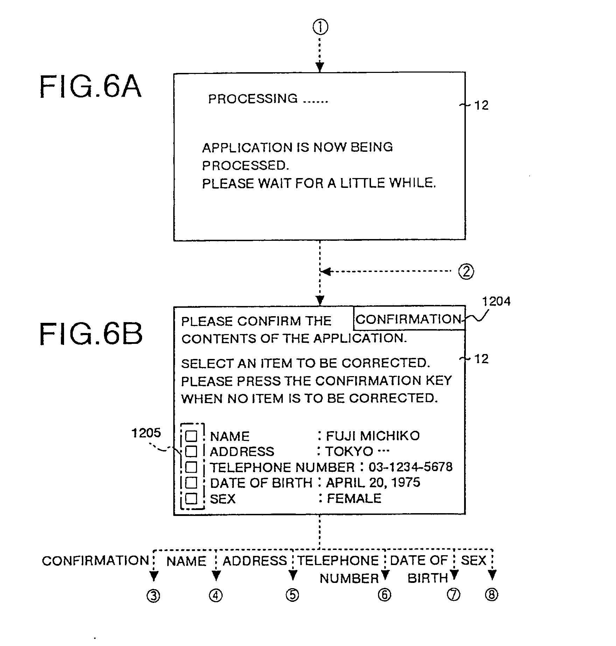

Assuming that the code number is a 4-digit number, when the code number is inputted and a prespecified operation for confirmation is executed, then the inputted code number is transmitted to the host device 61 at the passport center 6, and verification of the applicant is undertaken in the passport center 6 (host device 61), and the bank center (host device 31 and personal DB 32). Then a message "Processing..." is displayed on the screen (Fig. 6A). In a case of a credit card, communication is made with the credit company center 4.

When the operations for confirming the applicant are completed, personal information obtained through the above operations for confirming the applicant is displayed on the display screen. For instance, such data as a name, an address, a telephone number, a date of birth and sex is displayed for the applicant on the screen (Fig. 6B). In this step, personal data when the card was prepared is displayed, so that, if it is necessary to change any item or items in the personal data, the items should be changed in this step.

Therefore, in this stage, in addition to the personal information, a confirmation key 1204 for inputting a sign for confirmation by touching operation and a corrected item selection area for selecting an item for correcting the personal information are displayed.

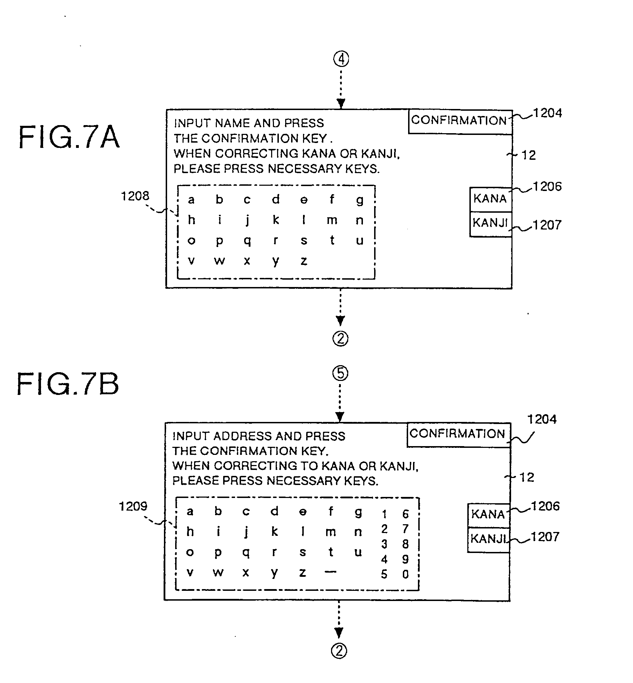

When the applicant selects the item of "Name" in the corrected item selection area 1205, a character selection area 1208 is displayed on the display screen, and also a kana key 1206 and a Kanji (Chinese Character) key 1207 are displayed for conversion to kana (Japanese character) or kanji (Chinese character) (Fig. 7A). When correction of "Name" is completed and the operation is confirmed by operating the confirmation key 1204, the screen changes to a screen for the next step in the procedure.

When the applicant selects, for instance, the item of "Address" in the corrected item selection area 1205, a character and number selection area 1209 is displayed on the display screen, and the kana key 1206 and kanji key 1207 for conversion to kana or kanji are displayed (Fig. 7B). When the correction of "Address" is completed and the operation is confirmed by operating the confirmation key 1204, the screen changes to a screen for the next step in the procedure.

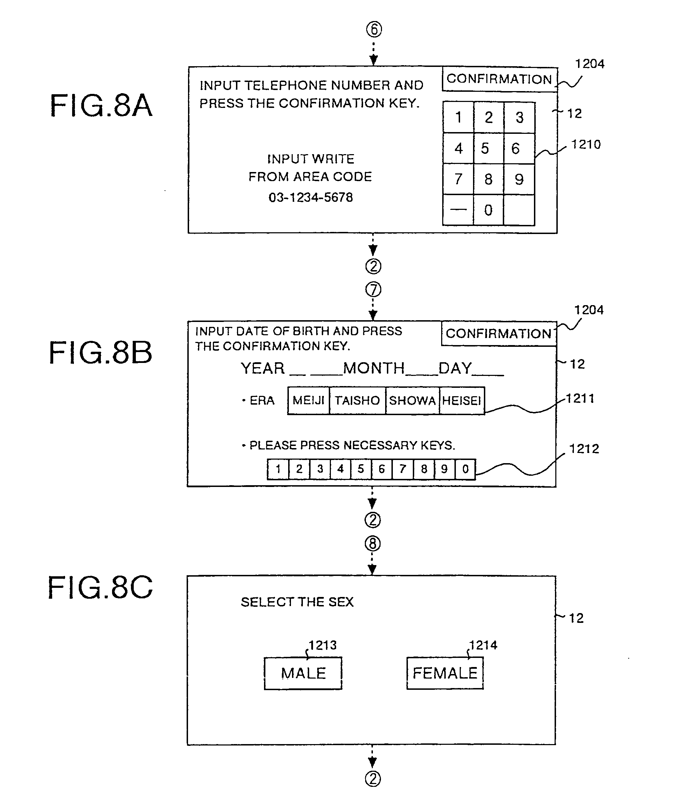

When the applicant selects, for instance, the item of "Telephone number" in the corrected item selection area 1205, a number selection area 1210 is displayed on the display screen (Fig. 8A). When correction of "Telephone number" is completed and the operation is confirmed by operating the confirmation key 1204, the screen changes to a screen for the next step in the procedure.

When the applicant selects the item of "Date of birth" in the corrected item selection area 1205, a name of an era section area 1211 for selecting any of the era Meiji, Taisho, Showa and Heisei and number keys 1212 consisting of digits from 0 to 9 are displayed on the display screen (Fig. 8B). When correction of "Date of birth" is completed and the operation is confirmed by operating the confirmation key 1204, the screen changes to a screen for the next step in the procedure.

When the applicant selects, for instance, the item of "Sex" in the corrected item selection area 1205, a male selection area 1213 and a female selection area 1214 are displayed on the display screen (Fig. 8C) . When correction of "Sex" is completed and the operation is confirmed by operating the confirmation key 1204, the screen changes to a screen for the next step in the procedure.

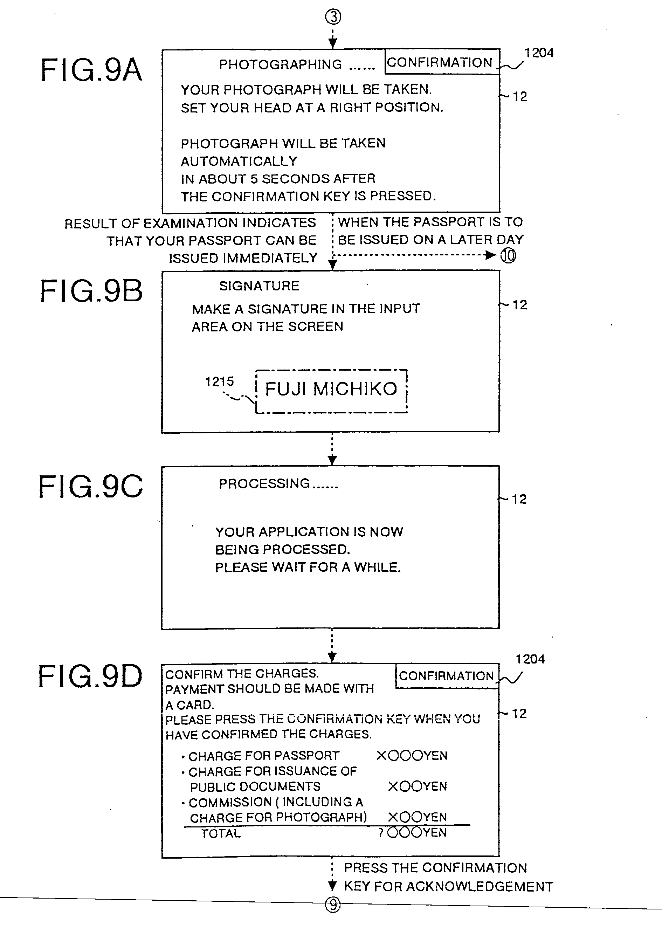

When the confirmation key 1204 is touched as it is after the operation for identifying the applicant is completed, or as it is when any correction is made in the corrected item selection area 1205, a guidance (a message) is displayed in order to take a photograph of the applicant for pasting on the passport (Fig. 9A).

After the photograph of the applicant is taken, a signature entry area 1215 is displayed so that the applicant can make a signature to be described on the passport. The applicant manually signs on this signature entry area 1215 (Fig. 9B). After the applicant's signature is inputted, a message "Processing..." is displayed on the display screen (Fig. 9C). In this step, the personal information is transferred to the passport center 6 and contents of the application is confirmed there. An examination of the passport application is executed at the passport center 6.

When the examination is completed and issuance of the applied passport is permitted, the passport is issued immediately or on a later day. When the passport is to be issued immediately, a charge for issuance of a passport is calculated, and the amount is displayed on the screen (Fig. 9D). A confirmation key 1204 is also displayed, and the applicant operates the confirmation key 1204 when he has confirmed the amount.

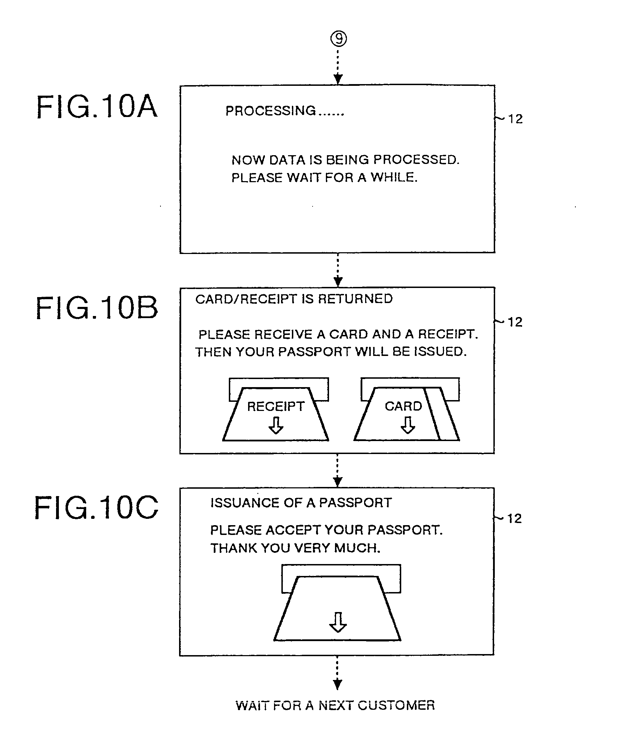

The sequence of operations described above is for paying a charge for passport application with a cash card, therefore, payment with a card is confirmed in this stage. A long period of time is required for this confirmation, hence, a message "Processing..." is displayed on the display screen (Fig. 10A).

When operations up to the payment above are completed, a display screen for returning the card and issuing a receipt is shown (Fig. 10B), and the cash card and a receipt are returned. After this, a message "Issuance of a passport" is formed on the display screen (Fig. 10C), and a new passport is issued.

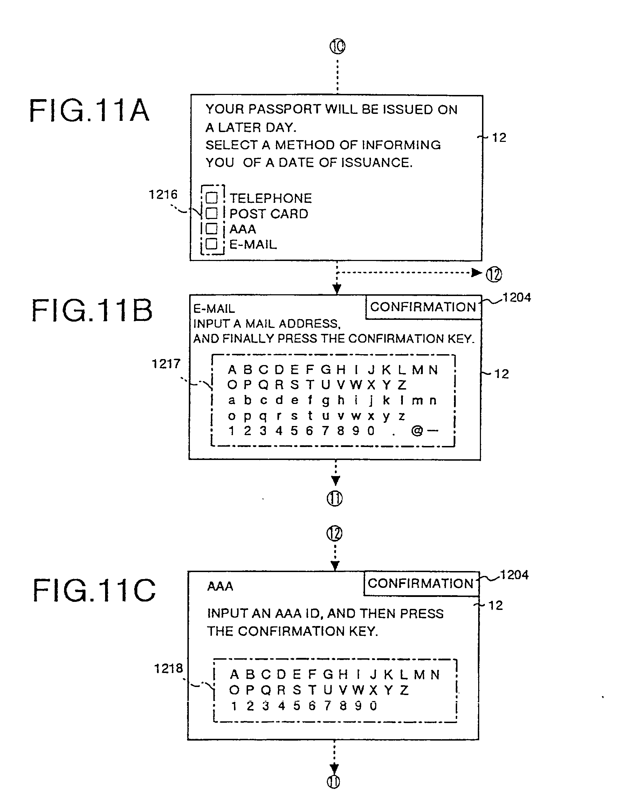

The above description assumed a case where an applied passport is issued immediately, but when the passport is to be issued on a later day (reception on a later day), as shown in Fig. 11A, the screen displays a correspondence item selection area 1216 for selecting a method of informing a date of issuance from the passport center 6 to the applicant. Items for choice include "Telephone" including a number of a mobile telephone or a PHS (Personal handyphone System), "Post card", "AAA" for a network for business purpose and "E-mail" through Internet.

When the applicant selects, for instance, "E-mail", a character selection area 1217 for inputting an E-mail address and the confirmation key 1204 are shown (Fig. 11B). The applicant inputs necessary characters from the character selection area 1217 and operates the confirmation key 1204 to complete the operation for inputting an E-mail address.

When the applicant selects "AAA", a character selection area 1218 for inputting an ID (ID number) for the network for business purpose and the confirmation key 1204 are displayed (Fig. 11C). The applicant inputs necessary characters from the character selection area 1218 and operates the confirmation key 1204 to complete the operations for inputting an ID.

When the applicant selects "Telephone" or the section of "Address", input can be executed according to the method of correcting personal information described above, so that the detailed description thereof is omitted herein.

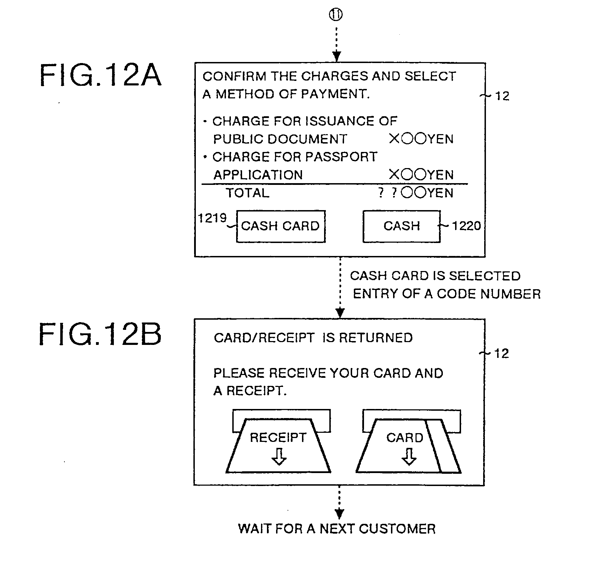

When the method of correspondence is decided as describe above, a selection screen for selection of a method of payment is formed (Fig. 12A). A cash card selection key 1219 and a cash selection key 1220 each for selecting a method of payment are displayed on this selection screen. When the cash selection key 1220 is selected, the applicant inserts cash into the cash inlet or outlet port 25 to execute the payment.

When the cash card selection key 1219 is selected on this screen, the applicant again inputs the code number in the same sequence as that on the code number input screen described above, and receives the cash card and a receipt as a memo. A message indicating that the applicant's cash card is returned and a receipt is issued is displayed on the display screen (Fig. 12B). Herein as the passport application number printed on the receipt is used also as a confirmation number when receiving a passport on a later day, the passport application number is registered together with the personal information in the personal database 62 at the passport center 6.

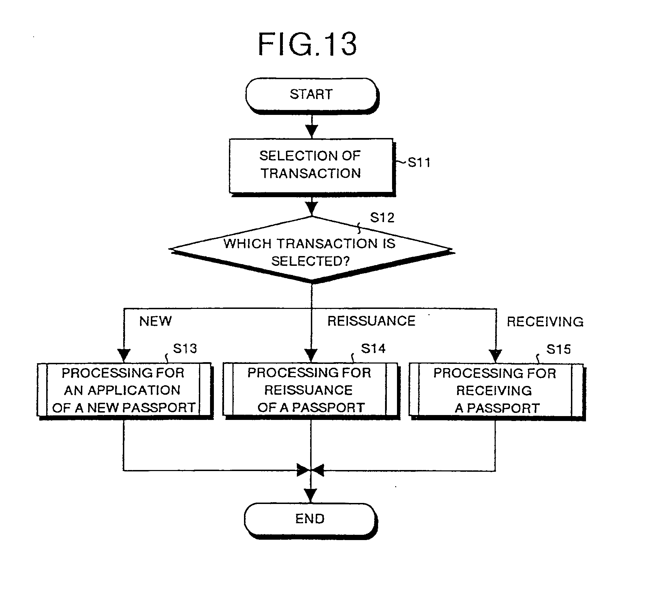

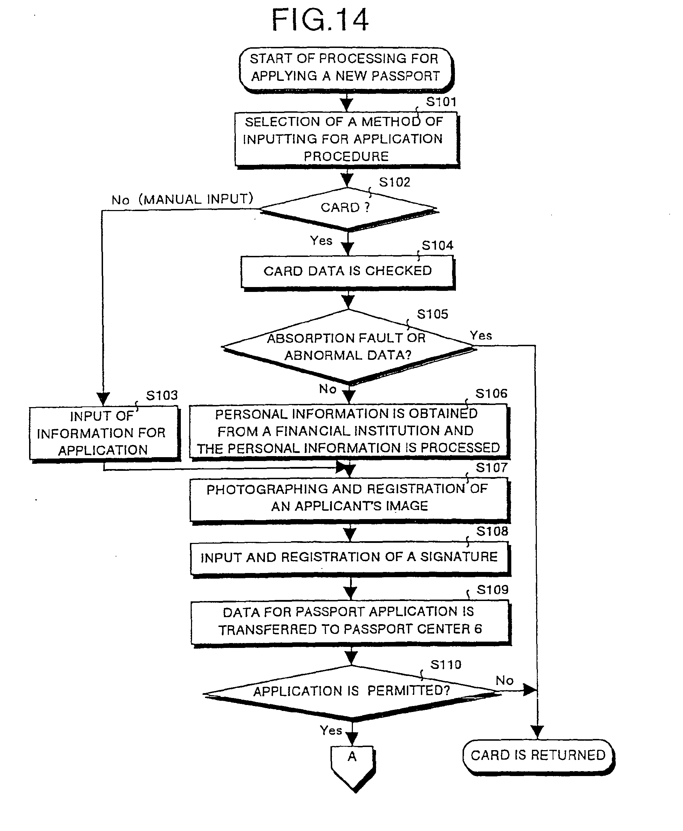

General operations as well as operations when processing an application for a new passport are explained. Fig. 13 is a flow chart showing the general operations in Embodiment 1 of the present invention, and Fig. 14 to Fig. 16 are flow charts showing the processing for application of a new passport in Embodiment 1. The description below assumes that, the process is executed under control by each of the passport transaction apparatuses 1A-1 to 1A-N, and that each operation is executed by each corresponding unit.

At first, as general operations, the transaction selection area 1201 for 3 types of "Application of a new passport", "Application of reissuance of a passport" and "Only accept a passport" is displayed as shown in Fig. 5A (step S11).

When "Application for a new passport" is selected in the transaction selection area 1201 (step S12), the processing for application of a new passport is executed in step S13 and then the processing is terminated. When "Reissuance of a passport" is selected (step S12), the processing for reissuing a passport is executed in step S14, and the processing is terminated. When "Only accept a passport" is selected (step 12), the processing for receiving a passport is executed in step S15, and the processing is terminated.

The operations when "Application of a new passport" is selected are explained with reference to Fig. 14 to Fig. 16. When an application is made for a new passport, four items for choices, namely "Cash card available", "Credit card available", "IC card available" and "Card not available (manual input) " are displayed in the procedure selection area 1202 as shown in Fig. 5B, and an operation for selecting any of items for selection of procedure is executed (step S101).

When any choice relating to use of a card is made in the procedure selection area 1202 (step S102), the processing shifts to step S104, the card is checked by referring to a code number corresponding to the inserted card, and then any fault such as absorption fault or data abnormality is checked in step S105. If any problem is found in reading the card in this step (step S105; YES route), the card is returned to the applicant, and the procedure is forcefully terminated.

When the inserted card is normally read without any fault detected in step S105, the processing shifts to step S106. In this step S106, inquiry on personal information is directly made to a financial institution, for instance, according to a code number corresponding to the inserted card, and personal information of the applicant is transferred to the passport transaction apparatus. The personal information is displayed on the display screen as shown in Fig. 6B, and if correction of the personal data is required, the personal information is changed. Then the processing shifts to step S107.

When manual input is selected in step S102, a character input screen is formed on the screen, and the applicant directly inputs the personal information for the applicant from the screen (step S103). Then, the processing shifts to step S203.

When personal information is obtained in step S103 or in step S106, the processing shifts to step S107. In step S107, a photograph of the applicant for pasting on a passport is taken, and then in step S108, a signature of the applicant to be printed on a passport is inputted in step S108. Then the processing shifts to step S109.

In step S109, an application for a new passport is executed to the passport center 6. Namely, an electronic message for an application for a new passport is transmitted to the host device 61 at the passport center 6, and in this step personal information for the applicant is sent together with an image data of the photograph and the signature.

In the passport center 6, the host device 61 sends a data request for certificates (a resident certificate, a copy of censor register) based on the personal information to the host device 51 at the local government office 5 according to the electronic message indicating the request from the passport transaction apparatus. When data for the certificates is received by the host device 61, the data for certificates is registered together with the image data of the photograph and signature and personal information for the applicant in the personal DB 62. In the host device 61, the application is examined by checking the fetched certificates and personal information, and a result of the examination is returned via the network 2 to the passport transaction apparatus from which a request was made.

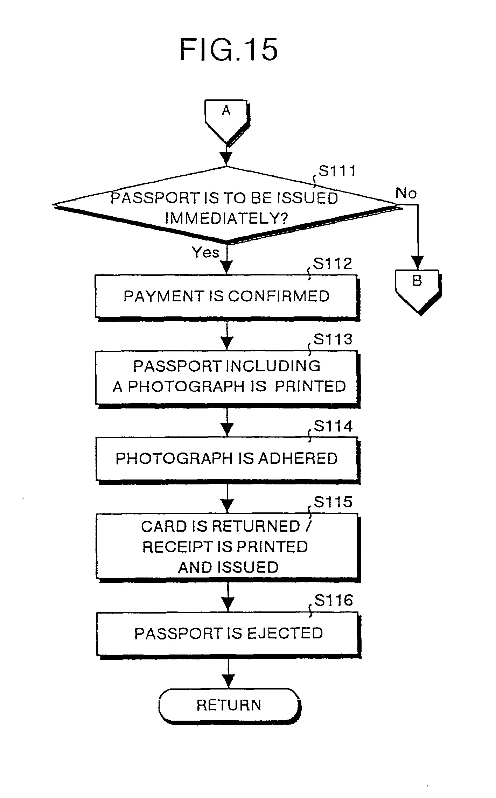

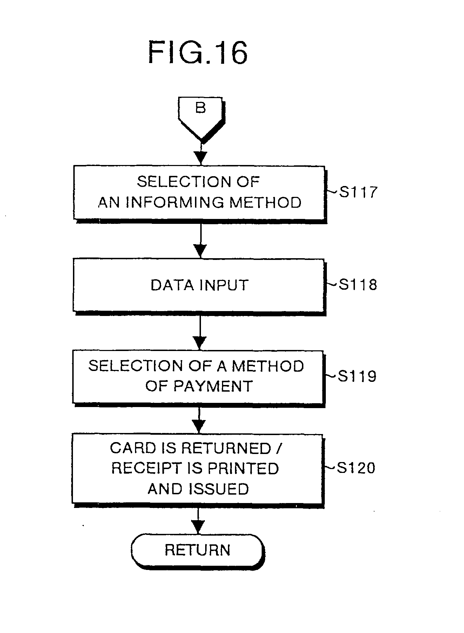

When the result of examination indicates that issuance of the applied passport is not permitted (step S110; NO route), the card is returned to the applicant, and the processing for the current application is terminated. On the other hand, when the received result of examination indicates that issuance of the applied passport is permitted (step S110; YES route), the processing shifts to step S111 (Fig. 15). In this step S111, it is determined whether the passport is to be issued immediately or on a later day. When it is determined that the passport is to be issued immediately, the processing shifts to step S112, and on the other hand when it is determined that the passport is to be issued on a later day, the processing shifts to step S117 (Fig. 16).

When the passport is to be issued immediately (on the spot) (step S111; YES route), a charge for the application is calculated and displayed, and when the applicant acknowledges the demanded amount of charge (step S112), printing of the passport including a photograph is executed (step S113).

The photograph is pasted on the passport (step S114), and then the card is returned to the applicant, a receipt for the charge is printed and issued (step 115), and finally a new passport is issued (step S116).

When the passport is to be issued (and received by the applicant) on a later day, as shown in Fig. 11A, a correspondence item selection area 1214 for selecting a method of informing a date of issuance from the passport center 6 to the applicant is displayed, and the applicant selects one item (Fig. 16, step S117).

When data input is executed according to an item selected in the correspondence item selection area 1214 (step S118), then either one of payment with cash or that with a cash card is selected (step S119). Then, the card is returned to the applicant, and a receipt as a memo for reception of the passport on a later day is printed and issued (step S120) . As already described, a number of the receipt is used as a number for confirmation when the applicant receives the passport on a later day, so that the passport application, number is registered together with the personal information in the personal DB 62 at the passport center 6.

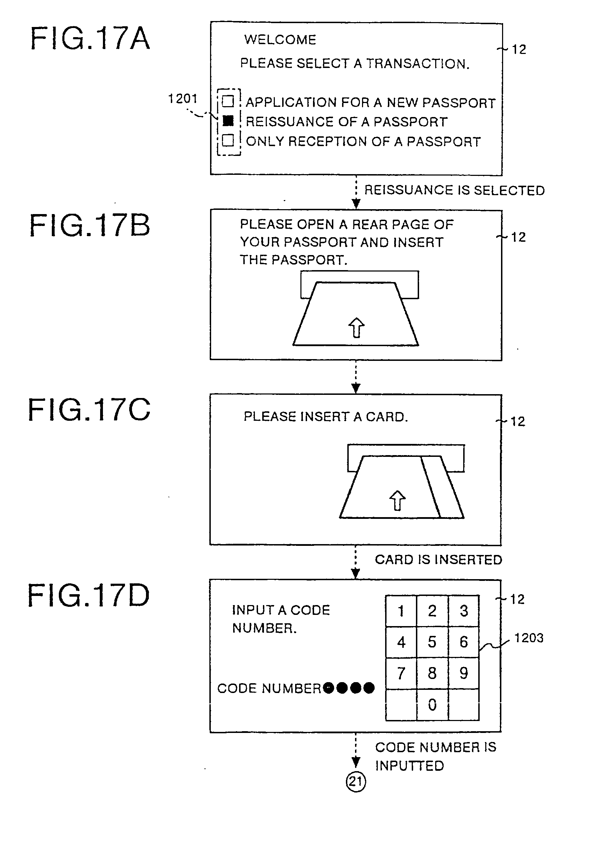

A sequence of operations for reissuing a passport is explained. Fig. 17A to Fig. 21C are views showing a procedure for reissuing a passport in Embodiment 1 of the present invention. When an applicant touches the section of "Reissuance of a passport" in the transaction selection area 1202 (Fig. 17A), the procedure progresses according to the displayed guidance for "reissuance of a passport".

As described above, when the procedure for "Reissuance of a passport" is selected, the display screen switches to an operating screen for a method of inputting the procedure for application of reissuance of a passport. Namely, the operating screen displays a message "Please set your current passport with the rear page opened" (Fig. 17B).

When the applicant inserts the applicant's passport into the passport insertion port 26a, selection items for 4 types of procedure; namely "Cash card available", "Credit card available", "IC card" and "Card not available (Manual input) " are displayed (Refer to Fig. 5B), and the selection procedure is executed. As described above, for instance, when the applicant touches the section of "cash card available", the message of "Please insert your card" is displayed on the display screen (Fig. 17C). When a card is inserted into the card insertion port 26b, the screen further switches to a screen for inputting a code number (Fig. 5D). Then, a number input area 1203 is formed on the display screen, and the applicant inputs a code number by touching necessary numbers within the number input area 1203.

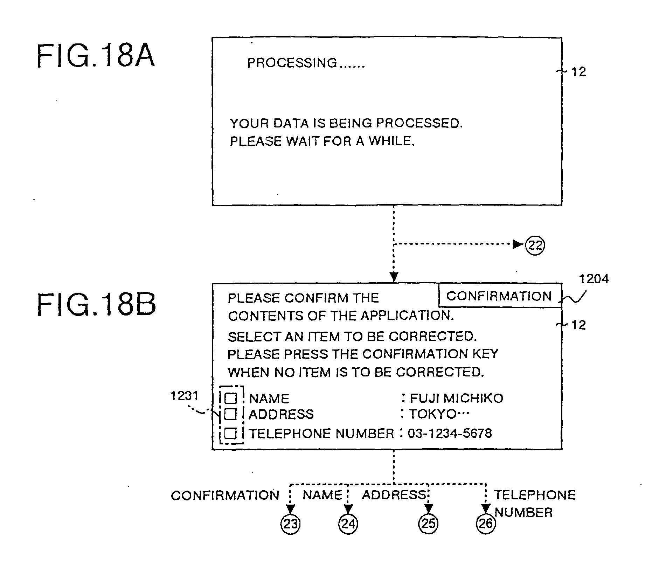

Assuming that the code number is a 4-digit number, when the code number is inputted and a specified operation for confirmation is executed, the code number is transferred to the host device 61 at the passport center 6, and confirmation of the applicant is made between the passport center 6 (host device 61) and the bank center 3 (host device 31 and the personal DB 32). In this step, the display screen shows the message of "Processing..." (Fig. 18A). When a credit card is used, communications is made with the credit company center 4.

When the procedure for confirming the applicant is completed, the personal information obtained in the step of confirmation of the applicant is displayed on the display screen. For instance, the applicant's name, address and telephone number are displayed (Fig. 18B). In this step, the personal information obtained when the card is obtained is used, so that, if the current personal information is different from the original one, correction should be made in this stage.

Here, the confirmation key 1204 for confirming by touching the screen and a corrected item selection area 1231 for selecting an item for correcting personal information are displayed on the display screen.

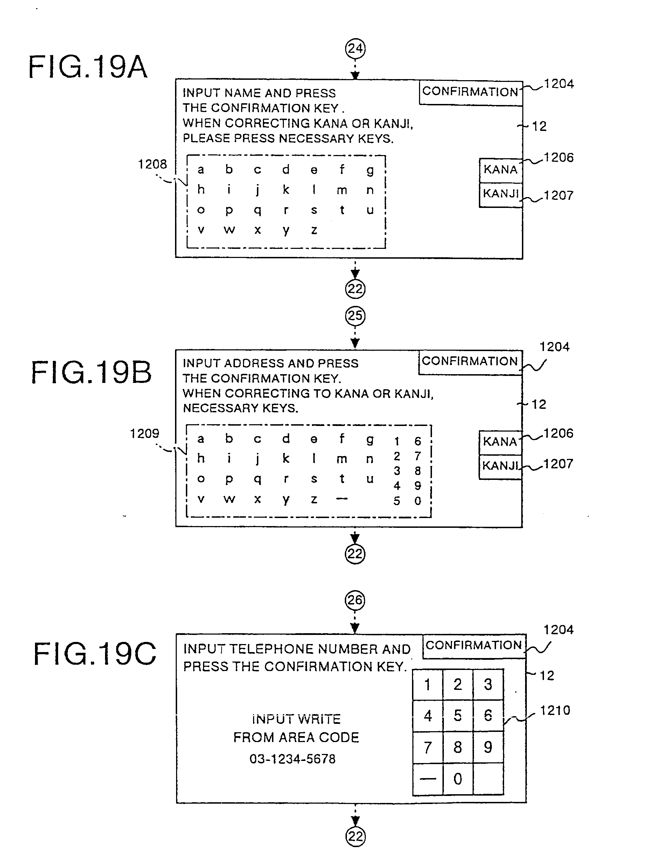

When the applicant selects, for instance, "Name" in the corrected item selection area 1231, a character selection area 1208 is displayed on the display screen, and also a kana key 1206 and a kanji key 1207 for conversion to kana or kanji are displayed (Fig. 19A). When correction of "Name" is completed and the operation is confirmed by operating the confirmation key 1204, the screen changes to a screen for the next step in the procedure.

When the applicant selects, for instance, the item of "Address" in the corrected item selection area 1231, a character and number selection area 1209 are displayed on the display screen, and further a kana key 1206 and a kanji key 1207 for conversion to kana or Kanji are displayed (Fig. 19B). When correction of "Address" is completed and the operation is confirmed by operating the confirmation key 1204, the screen changes to a screen for the next step in the procedure.

When the applicant selects, for instance, the item of "Telephone number" in the corrected item selection area 1231, a number selection area 1210 is displayed on the display screen (Fig. 19C). When correction of "Telephone number" is completed and the operation is confirmed by operating the confirmation key 1204, the screen changes to a screen for the next step in the procedure.

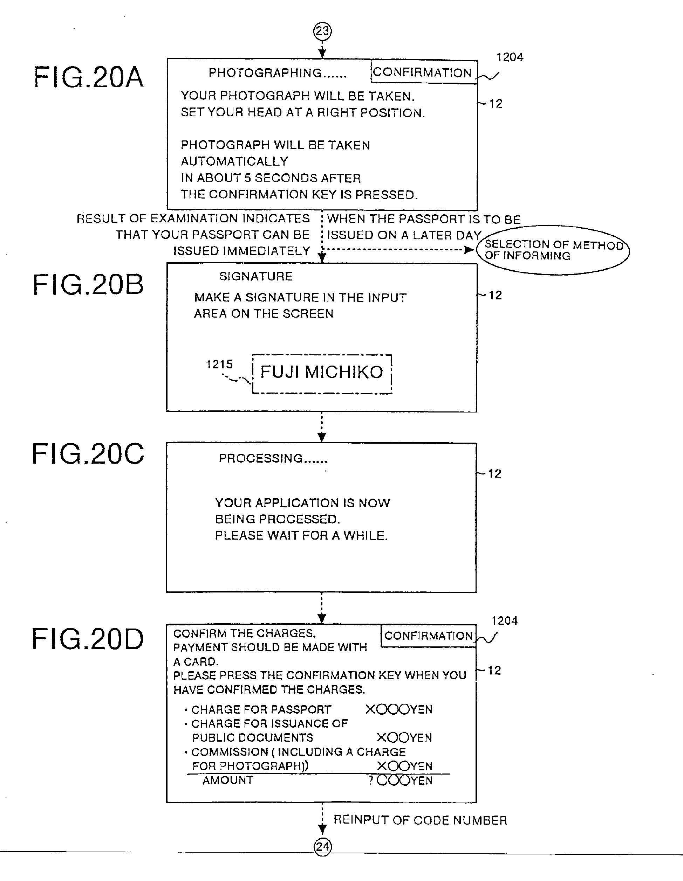

When the confirmation key 1204 is operated, as it is after the operation for identifying an applicant, or as it is when any correction is made in the corrected item selection area 1205, a guidance (message) is displayed in order to take a photograph of the applicant to be posted on a passport(Fig. 20A).

After the photograph is taken, a signature entry area 1215 is displayed so that the applicant can make a signature to be described on the passport. The applicant directly signs on this signature entry area 1215 (Fig. 20B). After the signature is inputted, a message "Processing..." is displayed on the display screen (Fig. 20C). In this step, personal information along with the image data for the photograph and the signature added thereon is transferred to the passport center 6 for confirmation of the contents. Namely, the passport application is examined in the side of passport center 6.

When the examination is completed and issuance of the passport is permitted, it is determined whether the passport is to be issued immediately or on a later day. When it is determined that the passport is to be issued immediately, a charge for issuance of the passport is calculated, and the amount is displayed on the screen (Fig. 20D). In this step, a confirmation key 1204 is also displayed, and the applicant operates the confirmation key 1204 he confirms the amount.

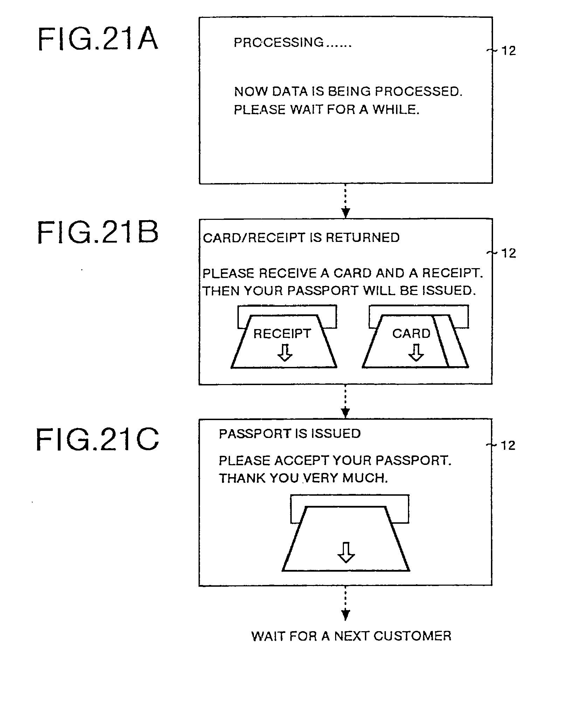

The sequence of operations described above is for paying a charge for issuance of a passport with a cash card, therefore, payment with a card is confirmed in this stage. A long time is required for this confirmation, hence, a message "Processing..." is displayed on the display screen (Fig. 21A).

When the procedure for payment of a charge is completed, a display screen for returning the card and issuing a receipt is formed (Fig. 21B), and the cash card is returned and a receipt is issued. After this, a message "Issuance of a passport" is displayed on the screen (Fig. 21C), and a new passport is issued.

The above description assumes a case where an applied passport is issued immediately, but when the passport is issued (or received) on a later day, the procedure progresses like in the case of application for a new passport described above.

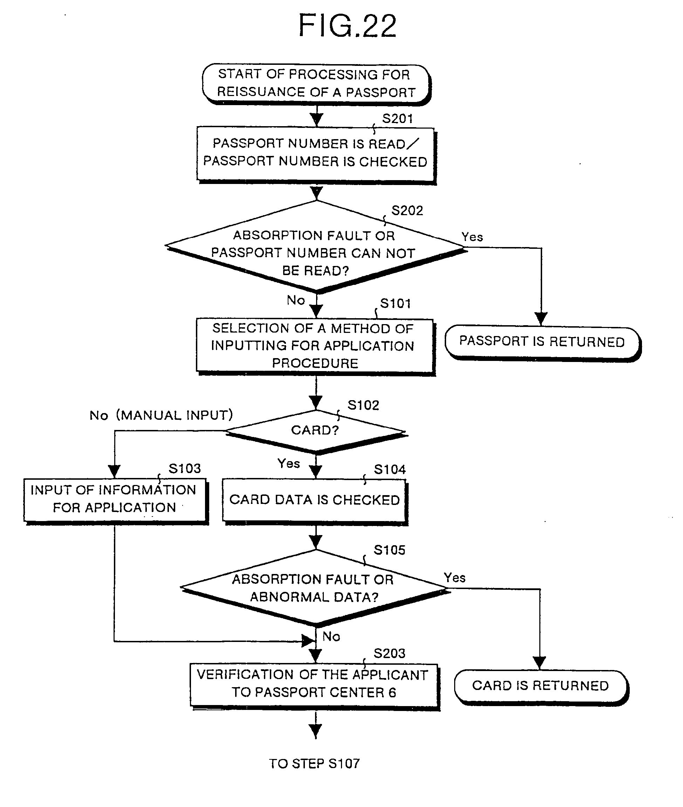

The processing for reissuing a passport is explained. Fig. 22 is a flow chart showing the processing for reissuing a passport in Embodiment 1 of the present invention. In the processing for reissuing a passport, as shown in Fig. 17B, when a passport is inserted according to a message for passport insertion, the passport number is read (step S201), and checking for faults such as absorption fault of the passport, or impossibility of reading the passport number is executed (step S202).

In this step, if the passport number is read successfully (step S202; NO route), the processing shifts to step S101. Namely, the processing like that in the processing for application of a new passport is started in this step. When use of a card is selected in the procedure selection area 1202 (step S101, S102), the processing shifts to step S104.

In step S104, the card is checked by checking a code number of the inserted card, and then in step S105, checking is made for any fault such as absorption fault or abnormal data. In this step, if there occurs a problem in reading the card (step S105; YES route), the card is returned and the procedure is forcefully terminated.

When the card is read successfully in step S105, the processing shifts to step S203. In this step S203, an inquiry concerning the personal information is made according to the code number of the card through the passport center 6 to a financial institution, and personal information for the applicant is obtained at the passport transaction apparatus. The obtained personal information is displayed on the display screen as shown in Fig. 18B, and if any correction is to be made, the personal information is changed. Then, the processing shifts to step S107 (Fig. 14).

When manual input is selected in step S102, an input screen for inputting characters is formed on the screen, and personal information for the applicant is directly inputted from the screen (step S103). Then, the processing shifts to step S107.

When complete personal information is obtained in step S103 or in step S203, the processing shifts to step S107, and the processing in step S107 and on is executed like in the case of application for a new passport described above.

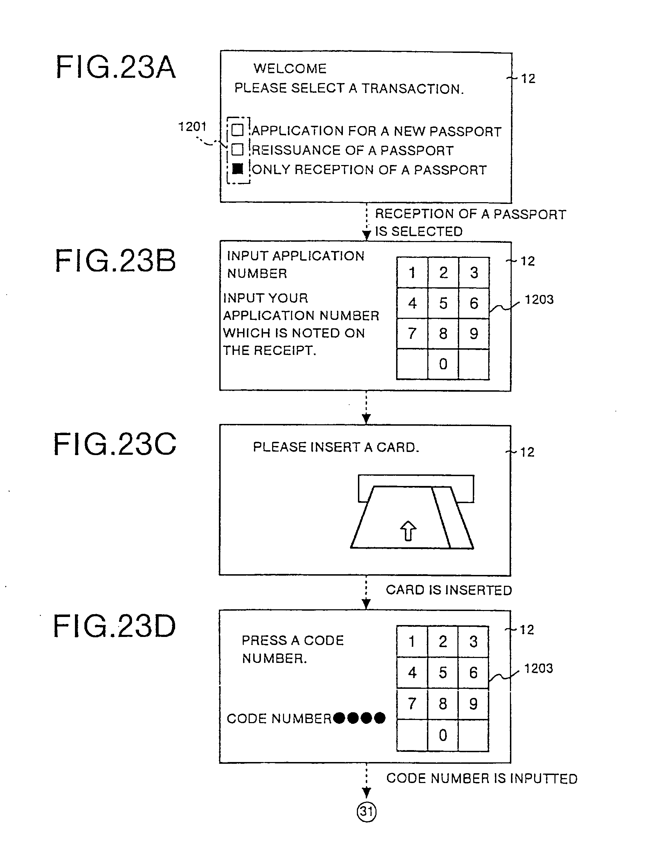

A sequence of operations for receiving a passport is explained. Fig. 23A to Fig. 25C are views showing a sequence of operations for receiving a passport according to Embodiment 1 of the present invention. Herein, when an applicant touches the section of "Only accept a passport" in the transaction selection area 1201 on the initial screen (Fig. 23A), procedure proceeds according to the guidance for "Only accept a passport".

As described above, when the procedure for "Only accept a passport" is selected, the display screen switches to an operational screen for a method of inputting an application for receiving a passport. In other words, a message "Please input the passport application number printed on the receipt" and a number input area 1203 consisting of the digits from 0 to 9 are displayed (Fig. 23B).

When the applicant inputs the passport application number, items for selection of 3 types of procedure, namely "Cash card available", "Credit card available", "IC card available" and "Card not available (Manual input)" are displayed like in a case of application for a new passport or of application for reissuance of a passport" (Refer to Fig. 5B), and the applicant selects one of these items.

When the applicant selects, for instance, "Cash card", a message "Please insert a card" is displayed on the display screen (Fig. 23C). When a card is inserted into the card insertion port 26b, the screen switches to that for inputting a code number (Fig. 23D) . In this step, the number input area 1203 is formed on the display screen, and the applicant inputs a code number by touching necessary numbers within the number input area 1203.

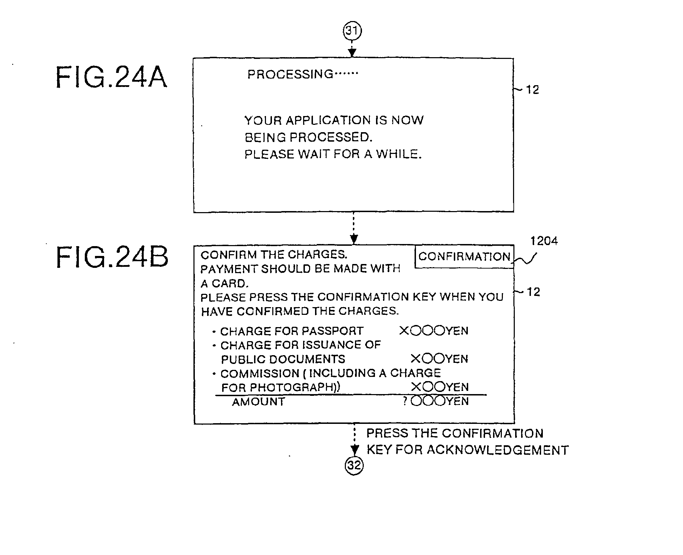

Assuming that the code number is a 4-digit number, when a code number is inputted and a specified operation for confirmation is executed on the screen, the code number is transmitted to the host device 61 at the passport center 6, and confirmation of the application is made between the passport center 6 (host device 61) and the bank center 3 (host device 31 and personal DB 32). Then a message "Processing..." is displayed on the display screen (Fig. 24A). It should be noted that, when a credit card is used, communications is made with the credit company center 4.

When the procedure for confirming the applicant is completed, personal information obtained in the step for confirming the applicant is displayed on the display screen. For instance, the applicant's name, address and telephone number are displayed (Refer to Fig. 18B). In this step, the personal information used when the card is obtained at first is displayed, and if the current personal information is different then correction should be made in this stage.

In this stage, in addition to personal information, the confirmation key 1204 for confirming the display personal information by touching and the corrected item selection area 1231 for selecting an item or items for correcting the personal information are displayed. As the procedure for correction is the same as that in the case of application for a new passport or for application for reissuance of a passport described above, description thereof is omitted herein.

When the confirmation key 1204 is operated, as it is after the operation for identifying the applicant, or as it is when any correction is made in the correction item selection area 1205, a message "Processing..." is displayed on the display screen (Fig. 24A). In this procedure, verification of the applicant is executed at the passport center 6. It should be noted that, confirmation of the applicant can be assisted at the passport center 6 by comparing the applicant' s photograph registered in the personal DB 65 to an image of the applicant monitored by a digital camera 14.

When verification of the applicant is completed and issuance of the passport is permitted, a charge for issuance of the passport is calculated, and an amount of charge is displayed on the screen (Fig. 24B). A confirmation key 1204 is also displayed, and the applicant operates the confirmation key 1204 when he has confirmed the amount.

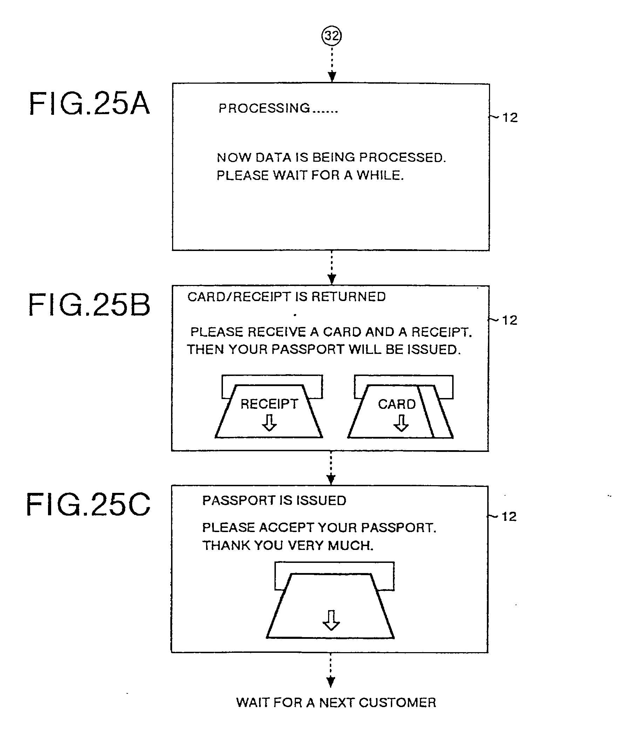

The above description is for paying a charge with a cash card, therefore, payment with a card is confirmed at this stage. A long time is required for this confirmation, hence, a message "Processing..." is displayed on the display screen (Fig. 25A).

When the procedure proceeds up to the step of payment, displays for operations to return the inserted cash card and issue a receipt are provided on the display screen (Fig. 25B), the cash card is returned with a receipt issued. Then, a message "Passport is issued" is formed on the screen, and the passport is issued.

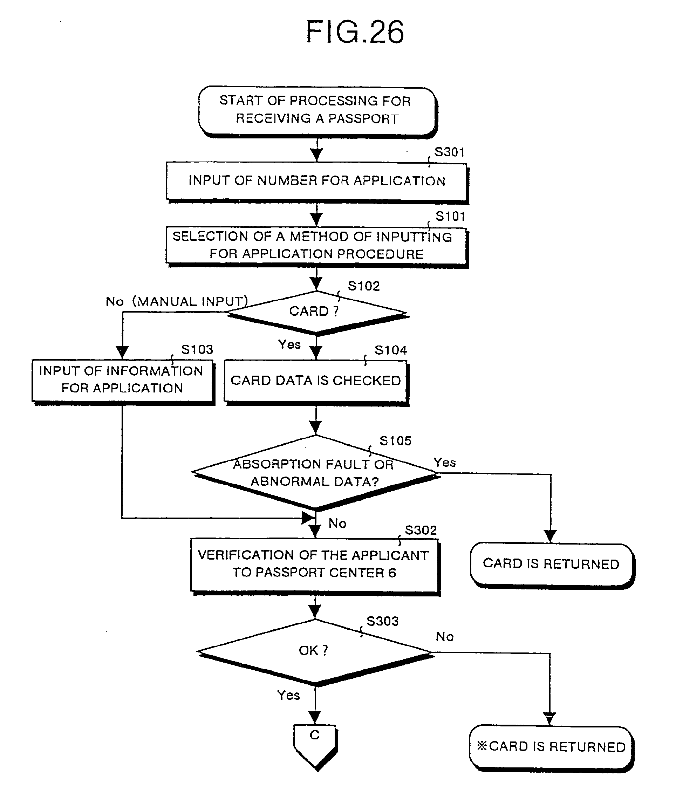

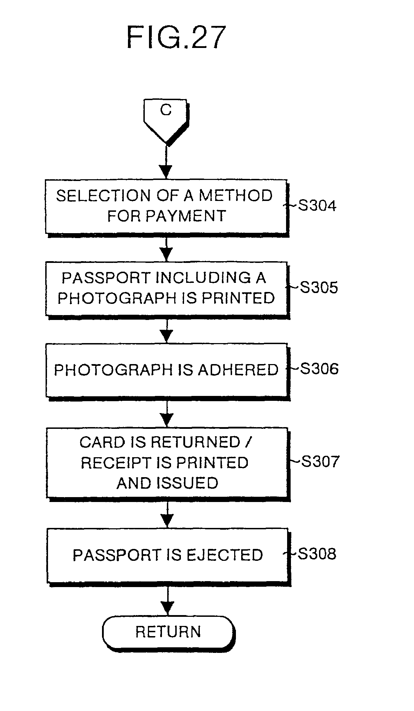

The processing for receiving a passport is explained. Fig. 26 and Fig. 27 are flow charts each showing the processing for receiving a passport in this Embodiment 1. In the processing for receiving a passport, as shown in Fig. 23B, a passport application number is inputted according to the message prompting input of a passport application number (step S301), and the inputted passport application number is temporally stored in a control section 17.

In this stage, the same processing as that in the processing for applying issuance of a new passport described above is started. Namely, the processing in step S101 to step S105 is executed. Then an inquiry of personal information is made, for instance, according to a code number on the inserted card via the passport center 6 to a financial institution (step S302), and the passport application number inputted in step S301 and the applicant are verified. As a result, when the applicant is verified (step S303; YES route), the processing shifts to step S304 (Fig. 27). On the other hand, when a result of verification is negative (step S303; NO route), the processing for receiving a passport is terminated. If a card has been inserted, the card is returned.

In step S304, a charge for application of the passport is calculated and displayed, and when the amount is confirmed by the applicant, in the next step S305, a passport including the applicant's photograph is printed.

Further a photograph is pasted to the passport (step S306), and then the applicant's card is returned, and a receipt for the charge paid by the applicant is printed and issued (step S307), and finally the passport is issued (step S308).

As described above, with Embodiment 1 of the present invention, when examination is made for permission of issuance of a passport between a passport transaction apparatus and a passport center, whether an applied passport is to be issued or not is determined at the center using data relating to passport transaction such as a manually-written signature obtained by the applicant at a passport transacting device, and when it is determined that the applied passport is to be issued, an image of the applicant is inputted at the passport transaction apparatus, and a passport with the image and contents of description required for issuance of a passport printed thereon is issued at the site. With this feature, passport transaction can be executed at a site through communications between a passport transaction apparatus and a center, so that passport transaction is simplified, which enables quicker transaction from application for a passport up to issuance thereof and also reduction of workload to the applicant. Especially there is provided the merit that information required for passport application and issuance thereof can simultaneously be,inputted on the spot.

A charge for passport application can be processed with a cash unit 20 on the spot where the passport transaction apparatus is installed, the same function as that of the vending machine can be realized.

A charge for passport application is processed using a card unit 18b and a communication control unit 22 through communications between a passport transaction apparatus and a financial institution, so that the same function as that of a cash dispenser can be realized. With this feature, an applicant can execute passport transaction even when the applicant does not carry cash with him.

An image obtained using the digital camera 14 is transferred to a passport center, so that the state of operations for passport application can be monitored in the side of the center.

Voice collected by the autophone 13 is transferred to a passport center and the voice transferred from the passport center is outputted from the speaker 11, so that voice communications between a passport transaction apparatus and a center can be realized.

When a passport is to be reissued, data for a passport already issued is inputted and data required for passport application is corrected, so that it is not necessary to again input all data required for passport application when applying reissuance of the passport, which enables improvement in the efficiency of data input when applying reissuance of a passport.

An image of an already issued passport is obtained with a passport reading unit 18a, and characters in the read image are recognized to input data required for passport application, so that such workload as key entry is not required and the efficiency in data input when applying reissuance of a passport can be improved.

When a passport is to be issued (or received) on a later day, ID data for identifying the applicant is printed on a receipt, whether the passport is to be issued or not is determined according to the ID data, and when it is determined that the applied passport is to be issued, the passport is issued, so that an applicant for a passport can easily be confirmed by checking data printed on a receipt.

An image of an applicant is taken with a digital camera, so that a still image of the applicant can be obtained. Therefore, a photograph to be adhered on a passport can be prepared on the spot.

Messages previously prepared are outputted from a speaker in a form of a voice according to progress in procedure of passport transaction, so that, even if there is no operator at the site, the applicant can execute passport transaction.

Display and data input are executed with the integrated touch panel display 12, so that the applicant can execute operations for passport transaction while watching a screen.

Data for issuing certificates for an applicant is read out through a passport center, and certificates based on the read out data are printed, so that the applicant can get certificates such as a resident certificate or a copy of censer register without going to a local government office.

Data is inputted from a storage medium for storing therein data required for passport transaction, so that the efficiency in data input can be improved.

By using an IC card as the storage medium, it is possible to identifying an applicant with enhanced security.

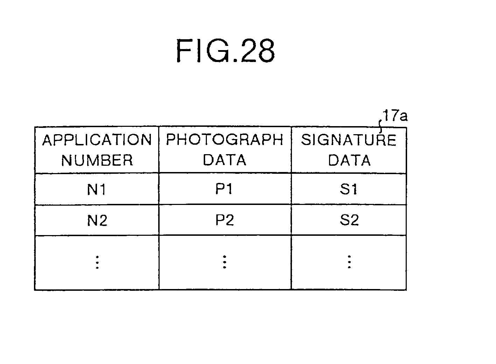

Description of Embodiment 1 above assumes a case where a photograph and a signature of the applicant are managed at the passport center, but such data may be managed at each of the passport transaction apparatuses A1-1 to A1-N. Fig. 28 shows a variant of the method of storing a photograph and a signature of the applicant according to Embodiment 1. In Fig. 28, the reference numeral 17a indicates a memory provided in the control section 17.

In this memory 17a, application numbers given to each applicant, photograph data of applicants, and signatures of the applicants are stored in correlation to each other. For instance, if an application number given to the applicant is N1, the photograph data P1 and signature data S1 of the applicant are stored in correlation to the application number N1. Similarly, if another applicant is given an application number of N2, the photograph data P2 and signature data S2 of the applicant are stored in correlation to the application number N2. This data is deleted from the memory 17a after the passport is issued or when an application for a passport is canceled by the applicant.

AS described above, by storing data such as photographs and signatures of the applicants at each of the passport transaction apparatuses A1-1 to A1-N, a required capacity of the personal DB 65 at the passport center can be suppressed to the minimum level.

In the Embodiment 1 above, when an application for a new passport is made, a photograph and a signature of the applicant are acquired before examination at the passport center 6, but like in the Embodiment 2 described above, photographing and input of a signature required for preparation of a passport may be carried out after the examination is completed.

In Embodiment 2, the passport transaction system as a whole is the same as that according to Embodiment 1 and also each individual configuration is the same as that in Embodiment 1, therefore, only functions relating to operations for taking a photograph of an applicant and input of a signature and the functions which are different from those in Embodiment 1 are explained below. Reference numerals and signs used for components used in the following description are the same as those in Embodiment 1. As it is not necessary to preserve a photograph or a signature of the applicant before it is determined that issuance of a passport applied by the applicant is permitted, it is not necessarily to provide items for taking a photograph or making signature like those in Embodiment 1, but that such items may be provided if required for convenience in management.

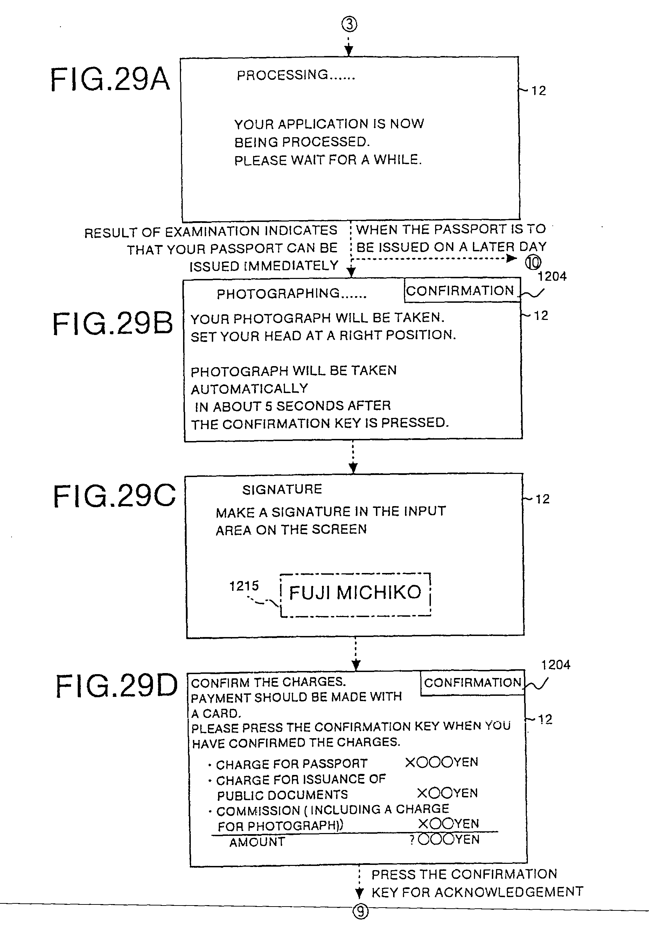

At first description is made for a sequence of operations for application of a new passport. In Fig. 5A to Fig. 12B in Embodiment 1, operations in Figs. 29A to 29D are applied in place of those in Figs. 9A to 9D in Embodiment 2. Figs. 29A to 29D are views showing a sequence of operations for applying a new passport in Embodiment 2.

In Embodiment 2, when the confirmation key 1204 is operated after the operation for confirming an applicant is completed, or when the confirmation key 1204 is operated after any item in the corrected item selection area is corrected, a message "Processing..." is displayed on the display screen (Fig. 29A). In this procedure, personal information is transferred to the passport center 6 and contents of the application is checked. Namely, examination of an application for a passport is executed in the side of passport center 6.

When the examination is over and issuance of the passport is permitted as described above, whether the passport is to be issued immediately or on a later day is determined. When it is determined that the passport is to be issued immediately, a guidance (message) is displayed in order to take a photograph of the applicant to be pasted onto a passport(Fig. 29B).

After a photograph is taken, the signature entry area 1215 is displayed so that the applicant can make a signature to be printed on the passport. The applicant manually writes his or her name on this signature entry area 1215 (Fig. 29C). After the signature is inputted, a charge for issuance of the passport is calculated, and the amount is displayed on the screen (Fig. 29D). In this step, the confirmation key 1204 is also displayed, so that the applicant operates the confirmation key 1204 to confirm the amount. Operations in this step and on are the same as those in Embodiment 1.

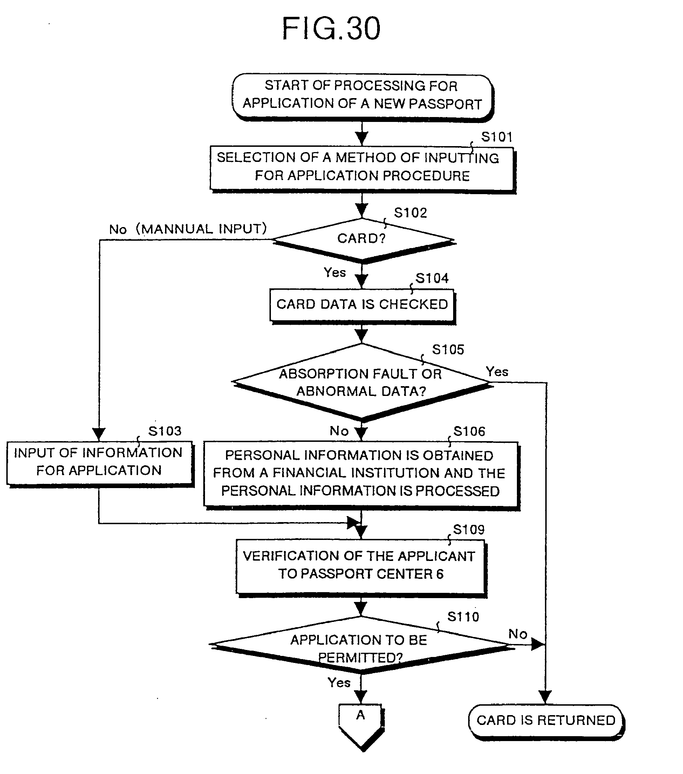

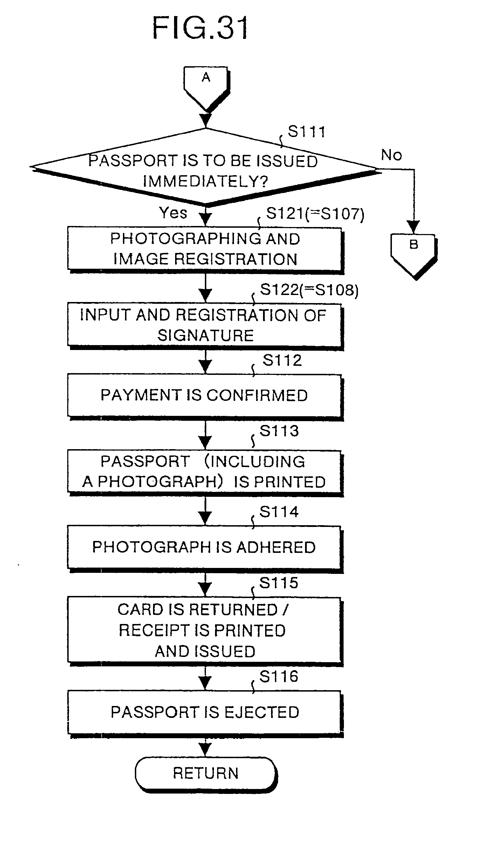

The processing for an application of a new passport is explained. Fig. 30 and Fig. 31 are flow charts showing the processing for an application of a new passport according to Embodiment 2 of the present invention. It should be noted that operations corresponding to those shown in Fig. 16 are identical also in Embodiment 2 and description thereof is omitted herein.

In the processing for an application for a new passport, as shown in Fig. 5B (like in Embodiment 1), 4 types of selection items, namely "Cash card available", "Credit card available", "IC card available" and "Card not available (Manual input) " are displayed in the procedure selection area 1202, and the applicant selects any of these items (step S101).

When use of any card is selected in the procedure selection area 1202 (step S102), the processing shifts to step S104, the card is checked by checking a code number thereon, and in step S105 any fault such as absorption fault or abnormal data is checked. In this step, if any problem is detected in reading the card (step S105; YES route), the inserted card is returned with the procedure forcefully terminated.

When the card is successfully read in step S105, the processing shifts to step S106. In this step, an inquiry of personal information is made, for instance, with a code number of the card, directly to a financial institution, and the personal information of the applicant is transferred to a passport transaction apparatus. The transferred personal information is displayed on the display screen as shown in Fig. 6B (like in Embodiment 1), and if any correction is required, the personal information is changed. Then the processing shifts to step S109.

When manual input is selected in step S102, a character input screen is formed on the screen, and personal information of the application is directly inputted from the screen (step S103). Then the processing shifts to step S109.

When complete personal information is obtained in step S103 or step S106, the processing shifts to step S109, and the processing for application of a new passport is executed to the passport center 6. Namely, an electronic message for application of a new passport is transmitted to the host device 61 at the passport center 6, and in this step also the personal information is transferred.

At the passport center 6, according to the electronic message transferred from the passport transaction apparatus, data request for certificates (such as a resident certificate, or a copy of censer register) based on the personal information is made by the host device 61 to the host device 51 in the local government office 5. When data for certificates is received by the host device 61, the data for certificates is registered together with the personal information in the personal DB 62. the application for a passport is examined at the host device 61 according to the fetched certificate and personal information, and a result of the examination is returned via the network 2 to the requesting passport transaction apparatus.

When it is determined as a result of examination that issuance of the applied passport is not to be permitted (step S110; NO route), the card is returned, and the current processing for passport application is terminated. On the other hand, when it is determined that issuance of the applied passport is permitted (step S110; YES route), the processing shifts to step S111 (Fig. 31) . In this step S111, whether the passport is to be issued immediately or on a later day is determined. When it is determined that the passport is to be issued immediately, the processing shifts to step S121, and on the other hand, when it is determined that the passport is to be issued on a later day, the processing shifts to step S117 (Refer to Fig. 16 in Embodiment 1).

At first, when it is determined that the passport is to be issued immediately (step S110; YES route), a photograph of the applicant to be pasted on the passport is taken (step S121), and then a signature of the applicant to be printed on the passport is inputted (S122). A charge for the passport application is displayed, and when the amount is confirmed by the applicant (step S112), the passport including the photograph is printed (step S113).

The photograph is pasted to the passport (step S114), and then the inserted card is returned and a receipt for the charge is issued (step S115), and finally a new passport is issued (step S116).

When it is determined that the passport is to be issued (received) on a later day, as shown in Fig. 11A (like in Embodiment 1), the correspondence item selection area 1214 for selecting a method of informing the applicant of a date of issuance from the passport center is displayed, and the applicant selects one of the methods displayed thereon (Refer to Fig. 16 in Embodiment 1, step S117). The subsequent processing is the same as that in Embodiment 1, so that description thereof is omitted herein.

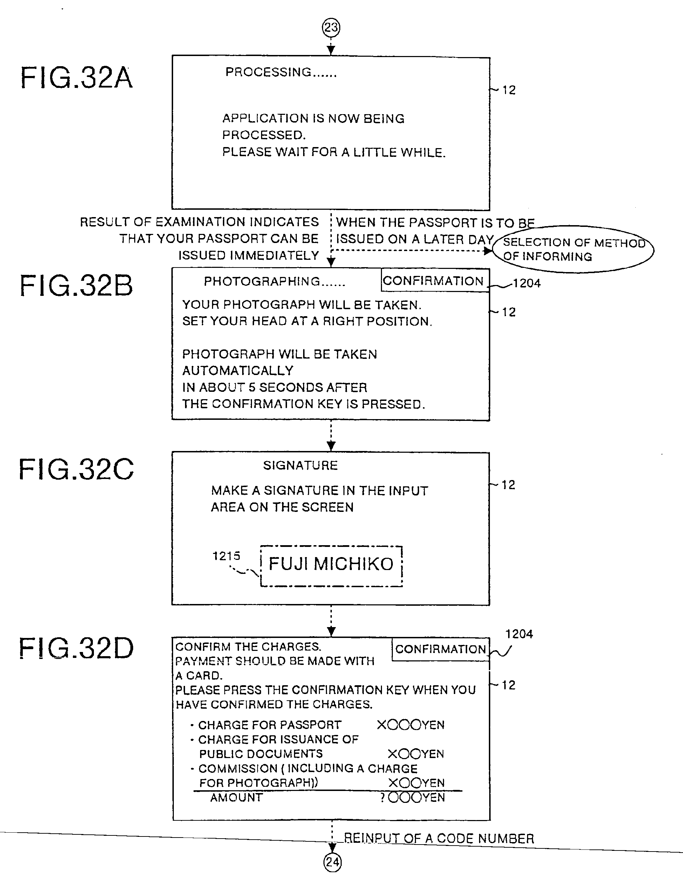

A sequence of operations for reissuing a passport is explained. Of Fig. 17A to Fig. 21C in Embodiment 1, operations in Figs. 20A to 20D is applied to Figs. 32A to 32D in Embodiment 2. Figs. 32A to 32D are views showing a sequence of operations for reissuing a passport in Embodiment 2.

Like in Embodiment 1, when the procedure for checking the applicant is completed and the confirmation key 1204 is operated without executing any other operation, or when any item in the corrected item selection area 1205 is corrected and then the confirmation key 1204 is operated, message "Processing..." is displayed on the display (Fig. 32A). In this procedure, personal information is transferred to the passport center 6 and contents of the application is checked. Namely, examination of the application for a passport is executed in the side of passport center 6.

when the examination is completed as described above and issuance of the passport is permitted, whether the passport is to be issued immediately or on a later day is determined. When it is determined that the passport is to be issued immediately, a guidance (message) is displayed in order to take a photograph of the applicant to be pasted on the passport (Fig. 32B).

After a photograph is taken, a signature entry area 1215 is displayed so that the applicant can make his or her signature onto a passport. The applicant directly and manually sign the applicant's name on this signature entry area 1215 (Fig. 32C) . After the signature is inputted, a charge for issuance of the passport is calculated, and the amount is displayed on the screen (Fig. 32D). In this step, the confirmation key 1204 is also displayed, so that the applicant confirms the amount by operating the confirmation key 1204. The subsequent operations are the same as that in Embodiment 1 described above, so that description thereof is omitted herein.

The procedure for reissuing a passport described above is, like in the case of applying a new passport described above, the same as that when a new passport is applied excluding the point that an operation for inputting a signature is different from that in Embodiment 1, so that detailed description thereof is omitted herein.

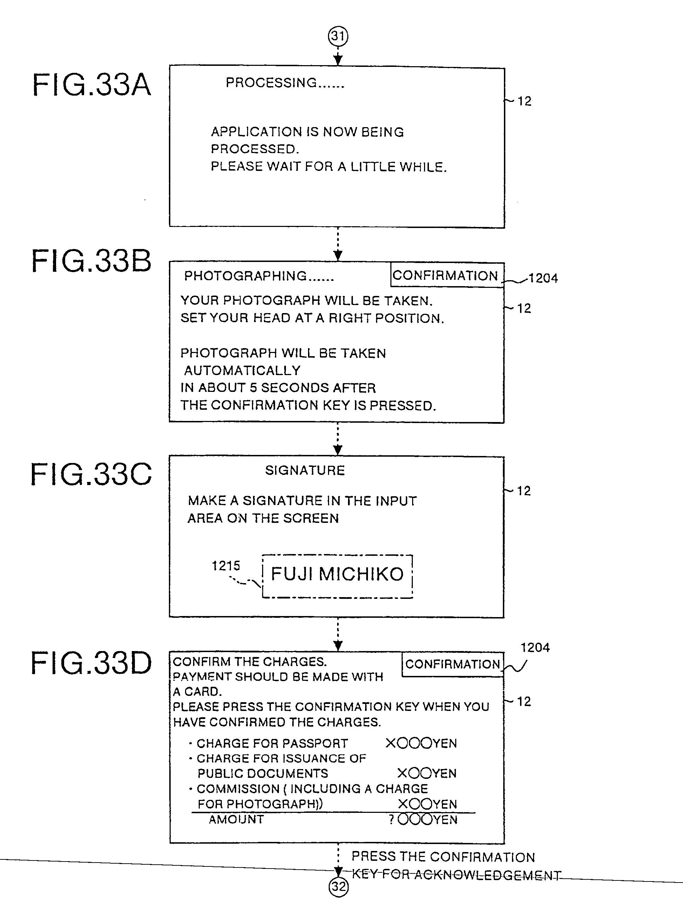

A sequence of operations for receiving a passport is explained. Of Fig. 23A to Fig. 25C in Embodiment 1, operations in Figs. 33A to 33D is applied to Figs. 24A and 24B in Embodiment 2. Figs. 33A to 33D are view showing a sequence of operations for receiving a passport in Embodiment 2.

Like in Embodiment 1, when an operation for confirming the applicant is completed and then the confirmation key 1204 is operated, or when any item in the corrected item selection area 1205 is corrected and then the confirmation key 1204 is operated, a message "Processing..." is displayed on the display screen (Fig. 33A). In this procedure, verification of the applicant is executed at the passport center 6.

When verification of the applicant is completed and issuance of the passport is permitted, a guidance (message) is displayed in order to take a photograph of the applicant to be pasted to a passport (Fig. 33B).

After a photograph is taken, a signature entry area 1215 is displayed so that the applicant can make a signature. The applicant directly and manually inputs a signature onto this signature entry area 1215 (Fig. 33C). After the applicant's signature is inputted, a charge for issuance of the passport is calculated, and the amount of money for the charge is displayed on the screen (Fig. 33D). A confirmation key 1204 is also displayed, and the applicant operates the confirmation key 1204 after confirming the amount. The subsequent procedure is the same as that in Embodiment 1, so that description thereof is omitted herein.

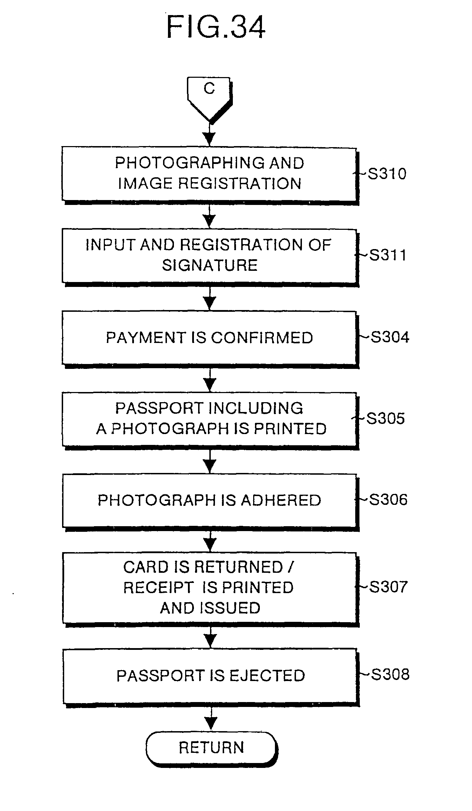

The processing for receiving a passport is explained. In this processing for receiving a passport, of Fig. 26 to Fig. 27 in Embodiment 1, Fig. 34 is applied in place of Fig. 27. Fig. 34 is a flow chart showing the processing for receiving a passport in Embodiment 2. In the processing for receiving a passport, as explained above in Fig. 238, a passport application number is inputted according to a message for prompting input of a passport application number, and the inputted passport application number is temporally stored in the control unit 17.

In this stage, the processing like that for application of a new passport is started. Namely, the processing from step S101 to step S105 is executed (Refer to Fig. 26). An inquiry of personal information is made, for instance, according to a code number of the card through the passport center 6 to a financial institution (step S302), and also the passport application number inputted in step S301 and the applicant are verified. As a result, when a result of verification above is affirmative (step S303; YES route), the processing shifts to step S310 (Fig. 34). On the other hand, when a result of verification is negative (step S303; NO route), the processing is terminated. If a card has been inserted, the card is returned to the applicant.

In step S310, a photograph to be pasted to a passport is taken, and then a signature of the applicant to be printed on the passport is inputted (step S311). Then a charge for the application is calculated and displayed, and when the amount is confirmed by the applicant (step S304), a passport including the photograph is printed (step S305).

The photograph is pasted to the passport (step S306), and the card is returned to the applicant and a receipt for the charge is printed and issued (step S307), and finally the passport is issued (step S308).

As described above, with Embodiment 2, the same effects as those in Embodiment 1 can be achieved, but a photograph and a signature of the applicant are obtained after an examination at the passport center 6, so that the procedure before examination can be suppressed to the minimum level, and also unnecessary operations for photographing and inputting a signature which may not be required according to a result of examination can be saved.

In addition, it is not necessary to preserve a photograph or a signature at the passport center 6, so that a capacity of the personal DB 65 can be suppressed to the minimum level. However, when it is required to preserve a photograph or a signature of an applicant for management, the required capacity of the personal DB 65 is the same as that in Embodiment 1.

In Embodiments 1 and 2, when an applicant applies for a passport through a passport transaction apparatus, a passport center accesses a host device at a local government office for examination of the passport application. However, embodiments of the present invention are not limited to this configuration, and like in Embodiment 3 described above, an examination of the application may be carried out by accessing a host device at a local government office or that at a passport center through a passport transaction apparatus.

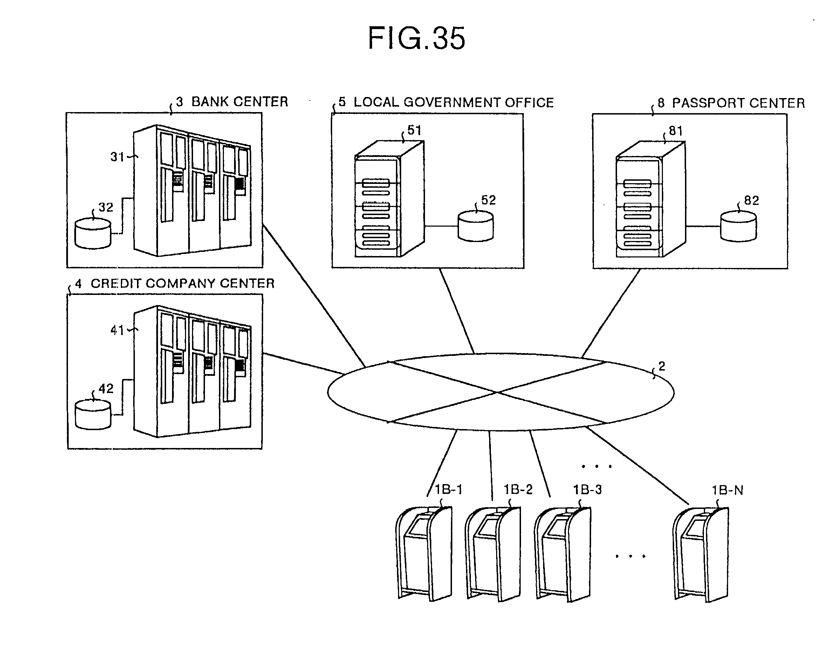

A passport transaction system according to Embodiment 3 of the present invention is described. Fig. 35 is a block diagram showing one example of the passport transaction system according to Embodiment 3 of the present invention. The general configuration of the passport transaction system according to Embodiment 3 is the same as that in Embodiment 1, so that description is made below for only the different portions.

In Fig. 35, the difference between Embodiment 1 described above is that, there is no communication line connecting the local government office 5, bank center 3, credit company center 4 and passport center 8 (having a host device 81 and a personal DB 82) and that passport transaction apparatuses 1B-1 to 1B-N directly communicate with each host device.

Thus, as the host device 81 provided at the passport center 8 performs the examination, and hence, operations for fetching various types of data at the local government office 5 or for verification to the bank center 8 or to the credit company center 4 are not required. Namely, all of the operations are executed in the side of passport transaction apparatus.

As described above, the functions in this Embodiment 3 are different from those in Embodiment 1, so that different reference numerals are used. Further functions of the passport transaction apparatuses 1B-1 to 1B-N are different from those in Embodiment, so that different numerals are used for the components.

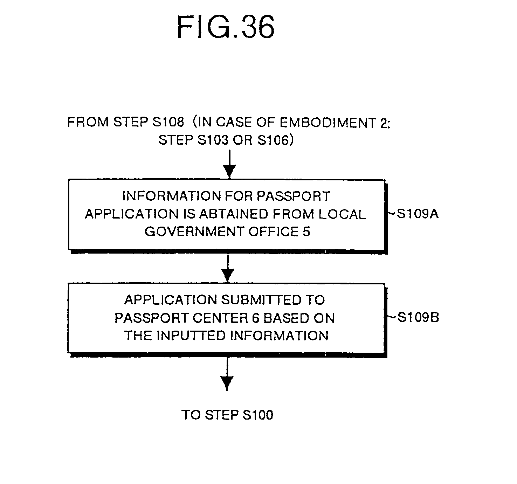

In the following, operations in this Embodiment 3 are described. Only the different portions from Embodiment 1 (or Embodiment 2) are described. At first, the processing for application of a new passport is described. Fig. 36 is a flow chart showing the processing for application of a new passport.

In Embodiment 1 above, in step S109, the passport center 6 fetches certificates such as a resident certificate or a copy of censor register with the host device 61 by accessing the host device 51 at the local government office 5. In contrast, in Embodiment 3, each of the passport transaction apparatuses 1B-1 to 1B-N itself accesses the host device 51 at the local government office 5 to fetch various types of certificate such as a resident certificate or a copy of censor register (step S109A) and executes the procedure for applying a passport at the passport center 6 with these certificates (step S109B).

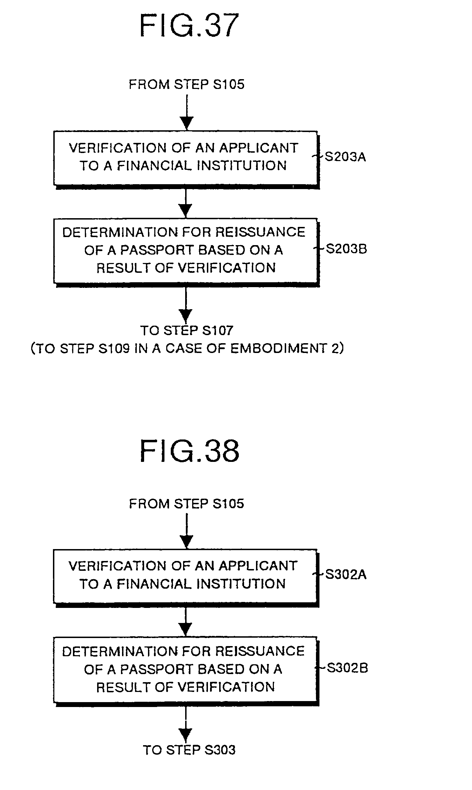

In the following, operations for reissuing a passport are described. Fig. 37 is a flow chart showing the processing for reissuing a passport according to Embodiment 3. In Embodiment 1 described above, in step S203, the passport center 6 accesses each of the host devices provided at the bank center 3 and credit company center 4 using the host device 61 for verifying the applicant. In contrast, in Embodiment 3, each of the passport transaction apparatuses 1B-1 to 1B-N itself accesses the host devices provided at the bank center 3 or credit company center 4 (step S203A), and determines whether the applied passport is to be reissued or not by communicating with the passport center 6 (step S203B).

In the following, operations for receiving a passport are explained. Fig. 38 is a flow chart showing the processing for receiving a passport in Embodiment 3. In Embodiment 1 (or in Embodiment 2) described above, in step S302, the passport center 6 accesses each of the host devices provided at the bank center 3 and credit company center 4 with the host device 61 to verify the applicant. In contrast, in Embodiment 3, each of the passport transaction apparatuses 1B-1 to 1B-N itself accesses the host devices provided at the bank center 3 or credit company center 4 (step S203A), and determines whether the passport is to be reissued or not by communicating with the passport center 6 (step S203B).

As described above, with Embodiment 3, when a passport transaction apparatus examines an application for issuance of a passport by communicating with a local government office and a passport center, the passport transaction apparatus verifies the applicant by communicating with a host device provided at the local government by using data required for passport transaction such as a signature manually written and inputted by the applicant, and makes a host device at the host device determines whether the applied passport is to be issued or not with an image of the applicant inputted at the passport transaction apparatus when it is determined that the applied passport is to be issued, and the passport with the image and contents for description for passport application printed thereon is issued on the spot.

With these features, passport transaction can be carried out on the spot through communications between a passport transaction apparatus and a passport center. Because of this feature, passport transaction is simplified, which enables quicker transaction from application of a passport up to issuance thereof and also reduction of workload to the applicant.

In Embodiment 4 of the present invention described below, an IC card is used in any of Embodiments 1, 2 and 3. Therefore, general configuration of the passport transaction system according to Embodiment 4 can be applied to any of Embodiments 1, 2 and 3, and description thereof is omitted herein.

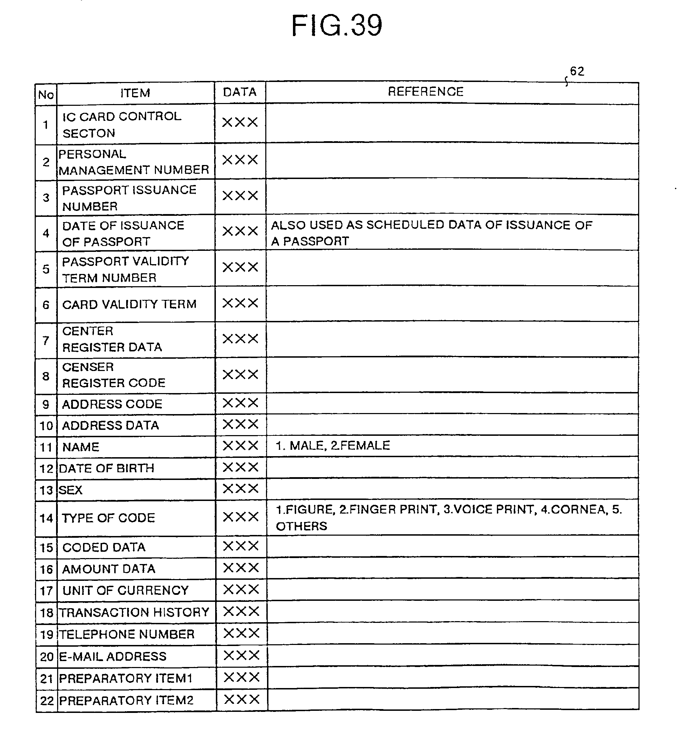

Herein a method of using an IC card is described. Fig. 39 is a view showing a method of storing the data in an IC card according to Embodiment 4. A memory is provided in an IC card, and information such as personal data is managed in the memory. In this memory, as shown, for instance, in Fig. 39, 22 items of data are registered therein. The items No. 1 to No. 22 represent respectively IC card control section, personal management number, passport issuance number, date of issuance of a passport, passport validity term number, card validity term, censor register code, censor register data, address code, address data, name, date of birth, sex, type of code, coded data, amount of data, unit of currency, transaction history, telephone number, E-mail address, preparatory item 1 and preparatory item 2.

Only the items different from those managed in the personal DB 63 at the passport center 6 are described. The common items are shared between the personal DB 62 and the IC card. The IC card control section corresponding to Item No. 1 shows identification data, control data or the like for a passport management device to access an IC card using a card reader. The card validity term indicates a validity term of the card as data. The currency unit indicates a unit of currency used for payment. The transaction history indicates history of any transactions.

As described above, with Embodiment 4, the data required for issuance of a passport and an applicant thereof are certified with data stored in an IC card so as to determine whether the passport is to be issued or not, and when it is determined that the passport is to be issued, an image of the applicant is inputted and a passport with the image and contents to be described on a passport printed thereon is issued on the spot. With this feature, passport transaction can be executed on the spot by certifying an applicant with data stored in a storage medium, and passport transaction is simplified, which enables quicker transaction from application of a passport up to issuance thereof and also reduction of workload to the applicant. It should be noted that features in Embodiment 4 can be applied to Embodiment 3 described above.

In Embodiments 1 to 4 described above, a cash card or a credit card is used for verifying an applicant, and the applicant is verified when a code number of a card carried by the applicant is correct. This is the same as a driver's license or an insurance certificate used for certifying an applicant.

It is necessary to optically recognize such a certificate as a driver's license or an insurance certificate for verifying an applicant when a card is not used for that purpose. In that case, a passport reading unit 18a provided in a passport transaction apparatus may be used. An applicant is required to insert various certificates such as a driver's license or an insurance certificate into the passport insertion port 26a.

In this case, in Embodiments 1 to 3, the processing for reading certificates and recognizing information for identifying an applicant from the data is required in place of an operation for reading a card, and the application is verified to a management institution handling various types of certificate according to a result of recognition. As described above, an applicant can be identified without using a card.

The present invention is described above with reference to Embodiments 1 to 4, but various types of variant are possible within a gist of the present invention, and the variants are not excluded from a scope of the present invention.

In an embodiment of the invention, an image of an applicant, data required for passport application, sign of the applicant are inputted and transmitted to a center, and determination as to whether the applied passport is to be issued or not is made according to certificate data for the applicant recorded in a resident database connected to the center as well as to various types of input data. Thus, all information required for application and issuance of a passport can be inputted at one place and time, whereby passport transaction can be simplified, and there is provided the effect that it is possible to provide a passport transaction apparatus which can perform quicker transactions from application for an application to issuance thereof and reduce the workload to the applicant.

In an embodiment of the invention, an image of an applicant, data required for passport application, sign of the applicant are inputted and transmitted together with certification data for the applicant fetched from a resident database to the center, and it is determined whether the applied passport is to be issued or not according to each of the various types of data. Thus, all information required for application and issuance of a passport can be inputted at one place and time, whereby passport transaction can be simplified, and for this reason there is provided the effect that it is possible to provide a passport transaction apparatus which can perform quicker transactions from application for a passport up to issuance thereof and reduce the workload to the applicant.

In an embodiment of the invention, determination as to whether an applied passport is to be issued or not is made at a center according to data inputted by an applicant when it is determined that the applied passport is to be issued, an image of the applicant is inputted and a passport with the image and contents of description for a passport printed thereon is issued at the site. Thus, passport transaction can be made at a place through communication with the center, whereby passport transaction is simplified, and for this reason there is provided the effect that it is possible to provide a passport transaction apparatus which can perform quicker transactions from application for a passport up to issuance thereof and reduce the workload to the applicant.

In an embodiment of the invention, data required for issuance of a passport and the applicant are certified by data stored in a storage medium to determine whether a applied passport is to be issued or not. When it is determined that the applied passport is to be issued, an image of the applicant is issued and a passport with the image and contents of description for the passport printed thereon is issued on the spot. Thus, passport transaction can be completed at a site by certifying an application for a passport with data stored in a storage medium, whereby passport transaction is simplified, and for this reason there is provided the effect that it is possible to provide a passport transaction apparatus which can perform quicker transactions from application for a passport up to issuance thereof and reduce the workload to the applicant.

In an embodiment of the invention, when a passport is reissued, data required for passport application is modified by inputting data for the passport already issued. Thus there is no need to input all the required data again when the same passport is reissued, and for this reason there is provided the effect that it is possible to provide a passport transaction apparatus in which efficiency for inputting data required for passport transaction can be improved by inputting data for the passport already issued.

In an embodiment of the invention, a passport already issued is reed as an image, and characters in the read image are recognized for data input, so that workload as that required in key entry is not required, and for this reason there is provided the effect it is possible to provide a passport transaction apparatus in which the efficiency in data input can be improved by utilizing a passport which has been issued already.

In an embodiment of the invention, authorization data for identifying an applicant when a passport is to be issued on a later day is printed, and it is determined whether an applied passport is to be issued or not is made according to the authorization data, and the passport is issued when it is determined that the passport is to be issued, and for this reason there is provided the effect that it is possible to provide a passport transaction apparatus in which it is possible to easily identify a applicant with a receipt.

In an embodiment of the invention, a digital camera is used to input an image of an applicant, so that it is possible to input a still picture, and for this reason there is provided the effect that it is possible to obtain a passport transaction apparatus which can obtain a photograph of the applicant to be pasted on a passport on the spot.

In an embodiment of the invention, a previously prepared message is outputted as a voice according to progress in procedure for passport transaction, and for this reason there is provided the effect that it is possible to provide a passport transaction apparatus in which passport transaction can be executed even when an operator is not present.

In an embodiment of the invention, display and data input are made with a display unit based on the integrated touch panel system, and for this reason there is provided the effect that it is possible to obtain a passport transaction apparatus in which an applicant can easily operate for passport transaction while watching a display screen.

In an embodiment of the invention, a charge for passport application is processed with cash, and for this reason there is provided the effect that it is possible to obtain a passport transaction apparatus which can realize the same functions as those of a vending machine.

In an embodiment of the invention a charge for passport application is processed through communication with a financial institution, so that the same functions as those of a cash dispenser can be realized, and for this reason there is provided the effect that it is possible to provide a passport transaction apparatus which can execute passport transaction even if an applicant does not have cash.

In an embodiment of the invention, data for issuing a certificate of an applicant is read out through the center, and the certificate is printed according to the read-out data, and for this reason there is provided the effect that it is possible to obtain a passport transaction apparatus which can provide such documents as a resident's certificate or a copy of an applicant's censor register.

In an embodiment of the invention, data input is executed from a storage medium for storing therein data required for passport transaction, and for this reason there is provided the effect that it is possible to obtain a passport transaction apparatus which can improve the efficiency in data input.

In an embodiment of the invention, data is inputted from a storage medium for storing therein data required for passport transaction, and for this reason there is provided the effect that it is possible to obtain a passport transaction apparatus which can execute identification with enhanced security.

In an embodiment of the invention, data for identifying an applicant is inputted, determination as to whether the passport is to be issued or not is made accessing the center and using the inputted data, and when it is determined that the applied passport is to be issued, the image of the applicant is inputted, and a passport with the image and contents of description of the passport printed thereon is issued, so that passport transaction can be made on the spot through communication with a center. Thus, with this feature the passport transaction is simplified, and for this reason there is provided the effect that it is possible to obtain a passport transaction method which enables quicker transaction from passport transaction up to issuance thereof and also reduction of work load to an applicant.

In an embodiment of the invention, data required for issuance of a passport and data for identifying an applicant of the passport are read out from a storage medium, determination as to whether an applied passport is to be issued or not is made according to the data, and when it is determined that the applied data is to be issued, an image of the applicant is inputted and a passport with the image and contents of description for passport printed thereon is issued. Thus, passport transaction can be executed on the spot by identifying an applicant with data stored in a storage medium, and with this feature passport transaction is simplified, and for this reason there is provided the effect that it is possible to obtain a passport transaction method which enables quicker transaction from passport application to issuance thereof and also reduction of work load to the applicant.

In an embodiment of the invention, when examination for issuance of a passport is executed between a passport transaction apparatus and a center, determination as to whether an applied passport is to be issued or not is made at the center using the data required for passport transaction inputted by the applicant at the passport transaction apparatus, and when it is determined that the applied passport is to be issued, an image of the applicant is inputted at the passport transaction apparatus and a passport with the image and contents of description for passport printed thereon is issued on the spot. Thus, passport transaction can be made on the spot through communications between the passport transaction apparatus and the center, and hence passport transaction is simplified, and for this reason there is provided the effect that it is possible to obtain a passport transaction system which enables quicker transaction from passport application up to issuance thereof and also reduction of work load to an applicant.

In an embodiment of the invention, when examination for issuance of a passport is executed in the passport transaction apparatus and first and second centers, verification of an applicant is made at the first center using data required for passport transaction inputted by the applicant at the passport transaction apparatus, determination as to whether the applied passport is to be issued or not is made at the second center, an image of the applicant is inputted at the passport transaction apparatus when it is determined that the applied passport is to be issued, and a passport with the image and contents of description for passport printed thereon is issued on the spot, so that passport transaction can be made at a site through communication between the passport transaction apparatus and centers. Thus, passport transaction is simplified, and for this reason there is provided the effect that it is possible to obtain a passport transaction system which enables quicker transaction from passport application up to issuance thereof and also reduction of work load to the applicant.

In an embodiment of the invention, an inputted image is transferred to a center, and hence there is provided the effect that it is possible to obtain a passport transaction system in which progress of procedure for passport transaction made by an applicant can be monitored at the center.

In an embodiment of the invention, an inputted voice is transferred to a center and a voice transferred from the center is outputted, and for this reason there is provided the effect that it is possible to obtain a passport transaction system in which that voice communication for passport transaction can be realized between the passport transaction apparatus and the center.

In an embodiment of the invention, a charge for passport application is processed with cash on the spot where a passport transaction apparatus is installed, and for this reason there is provided the effect that it is possible to obtain a passport transaction system in which the same functions as those of a vending machine can be realized.

In an embodiment of the invention, a charge for passport application is processed through communications between a passport transaction apparatus and a financial institution, so that the same functions as those of a cash dispenser can be realized, and for this reason there is provided the effect that it is possible to obtain a passport transaction system in which it is possible for an applicant to execute passport transaction even if the applicant does not carry cash.

This application is based on Japanese patent application No. HEI 10-207885 filed in the Japanese Patent Office on July 23, 1998, the entire contents of which are hereby incorporated by reference.

Although the invention has been described in relation to particular embodiments for a complete and clear disclosure, the appended claims are not to be thus limited but are to be construed as embodying all modifications and alternative constructions that may occur to one skilled in the art which fairly fall within the basic teaching herein set forth.

## Claims

1. A passport transaction apparatus (1A-1 to 1A-N) for processing a passport transaction for an applicant, connected to a resident's database (52) storing therein identification data of the residents and also connected to a center (6) which executes an examination for issuance of passports through a communication line, said apparatus comprising:
a communication unit (22) for communicating with said center;
an image input unit (14) for inputting an image of the applicant for a passport;
a display unit (12) for displaying a guidance for a procedure for the passport transaction;
a data input unit (12) for inputting data for the application according to the procedure for the passport transaction displayed on said display unit;
a signature input unit (12) for inputting a signature of the applicant; and
a control unit (17) for transmitting the data inputted by each of said input units to said center by using said communication unit and for orchestrating said center so as to determine whether the applied passport is to be issued or not based on the identification data for the applicant which has been recorded in said resident database and on each of the transmitted input data.

2. A passport transaction apparatus according to claim 1; wherein
the communication unit (22) further communicates with said resident's database (52), and
the control unit (17) transmits the data inputted by each of said input units (12) and the identification data of the applicant fetched using said communication unit to said center by using said communication unit and orchestrates said center so as to determine whether the passport is to be issued or not based on the transmitted data.

3. A passport transaction apparatus according to claim 1, further comprising:
a printer unit (21) for printing the image inputted by the image input unit and contents of the passport on a passport paper prepared previously; and
an issuer unit (23) for issuing a passport obtained by printing with said printer unit,
wherein said control unit (17) controls the communications by said communication unit (22), image input by said image input unit (14), display by said display unit (12), data input by said data input unit (12) and issuance of a passport by said issuer unit, and
sends the data inputted by each of said input units (12) to said center (6) using said communication unit (22) and orchestrates said center so as to determine whether the passport is to be issued or not, when it is determined that the passport is to be issued, makes the printer unit (21) print the image of the applicant inputted by said image unit (14) and contents of the passport onto a passport paper prepared previously, and makes the issuer unit (23) issue the passport obtained by printing.

4. A passport transaction apparatus according to claim 1, further comprising:
a storage medium (52, 62) storing the data required for issuance of passports and the data for identifying the applicants for the passports;
a reader unit (17) for reading out the data from said storage medium;
a printer unit (21) for printing an image inputted by said image input unit (14) and the contents of the passport onto a passport paper previously prepared; and
an issuer unit (23) for issuing a passport obtained by printing with said printing unit,
wherein said control unit controls the communications by said communication unit, image input by said image input unit, display by said display unit, reading by said reader unit, data input by said data input unit and issuance of a passport by the issuing unit, and
determines whether the applied passport is to be issued or not based on the data read out by said reading unit (18a), and when it is determined that the passport is to be issued, prints the image of applicant inputted by said image input unit (14) and contents of the passport printed onto a passport paper previously prepared using the printing unit and issues the passport obtained by printing using the issuing unit (23).

5. A passport transaction apparatus according to any preceding claim further comprising a passport data input unit (12) for inputting the contents of an issued passport as data; wherein said control unit (17) orchestrates, when reissuing a passport, said display unit (12) and said data input unit so as to amend the data required for application of the passport of data inputted from the passport data input unit (12).

6. A passport transaction apparatus according to claim 5; wherein said passport data input unit (12) reads the image of an issued passport and recognizes the characters in the read image in order to input the data.

7. A passport transaction apparatus according to any preceding claim further comprising:
a receipt issuer unit (19) for issuing a receipt authorization data for checking an applicant when a passport is issued to the applicant; and
a storage unit (16) for storing therein authorization data printed on the receipt issued by the receipt issuing unit; wherein said control unit (17) makes a determination, when the authorization data is inputted by the data input unit (12), as to whether the applied passport is to be issued or not by verifying the authorization to the storing unit, and when it is determined that the applied passport is to be issued, prints the image of the applicant inputted by said image input unit (14) and contents of the passport on a passport paper previously prepared using the printer unit (21) and issues the passport obtained by printing using said issuing unit (23).

8. A passport transaction apparatus according to any preceding claim; wherein said image input unit (14) is a digital camera.

9. A passport transaction apparatus according to any preceding claim further comprising a voice outputting unit (11) for providing guidance for procedure of passport transaction with voice; wherein said control unit (17) outputs messages previously prepared with voice according to progress of procedure of passport transaction by controlling said voice outputting unit.

10. A passport transaction apparatus according to any preceding claim; wherein said display unit (12) is a display unit based on an integrated touch panel system.

11. A passport transaction apparatus according to any preceding claim further comprising:
a direct payment unit (20) for payment of a charge for passport application with cash; wherein said control unit (17) controls input of cash and change by controlling operations of said direction payment unit.

12. A passport transaction apparatus according to any preceding claim; wherein said communication unit (22) is connected to a center of a financial institution (3, 4), said apparatus further comprises an indirect payment unit (18b) connected to a center of a financial institution for processing a charge for passport application through communication between said communication unit (22) and said financial institution, and said control unit (17) controls payment with the financial institution by controlling operations of said indirect payment unit.

13. A passport transaction apparatus according to any preceding claim; wherein said control unit (17) reads out, when issuing a certificate for an applicant, data for issuing a certification for the applicant from the center (6) with the communication unit (22), and prints the certificate based on the read-out data using said printing unit (21).

14. A passport transaction apparatus according to any preceding claim; wherein said data input unit (12) executes data input from a storage medium storing therein data required for passport transaction.

15. A passport transaction apparatus according to claim 4 or any one of claims 5 to 14; when read as appended to Claim 4; wherein said storage medium (15) is an IC card.

16. A passport transaction method of processing a passport transaction for an applicant, connected to a resident's database(52) storing therein identification data of the residents and also connected to a center(6) which executes an examination for issuance of passports through a communication line, said method comprising:
communicating with said center;
inputting an image of the applicant for a passport;
displaying a guidance for a procedure transaction;
inputting data for the application according to the procedure for the passport transaction displayed on said display unit;
inputting a signature of the applicant; and
transmitting the data inputted by each of said input units to said center by using said communication unit and orchestrating said center so as to determine whether the applied passport is to be issued or not based on the identification data for the applicant which has been recorded in said resident database and on each of the transmitted input data.

17. A passport transaction method according to claim 16, further comprising:
communicating with said resident's database(52); and
transmitting the data inputted by each of said input units(12) and the identification data of the applicant fetched using said communication unit to said center by using said communication unit and orchestrating said center so as to determine whether the passport is to be issued or not based on the transmitted data.

18. A passport transaction apparatus according to claim 3, wherein the passport transaction apparatus connects via a communication line to a center (6) accessibly connected to a first database (52) storing therein data for issuing certificates to applicants, registering data for issuance of passports in a second database (62), and executing examination for issuance of passports and, wherein
the control unit (17) accesses the center (6) using the communication unit (22), asks the center to make determination as to whether the applied passport is to be issued or not according to the data inputted by the data input unit (18a), and when it is determined that the applied passport is to be issued, has an image of the applicant inputted by the image input unit (14) and contents of description of the passport onto a passport paper previously prepared and the passport obtained by printing issued with the issuing unit (21); and the center verifies the data inputted by the data input unit according to a request from the passport transaction apparatus to the first and second databases respectively by way of communication with the communication unit and returns a reply as to whether each applied passport is to be issued or not according to a result of verification.

19. A passport transaction apparatus according to claim 3, wherein the passport transaction apparatus connects via a communication line to a first center (5) having a first database (52) with data required for issuance of certificates for applicants registered therein and a second center (6) for registering data for issuance of passports in a second database (62) and also executing examination for issuance of passports, and wherein
the control unit (17) accesses the first and second centers respectively using the communication unit (22), verifies the applicant for the passport according to the data inputted with the data input unit (12), makes determination as to whether the applied passport is to be issued or not, and when it is determined that the applied passport is to be issued, has the image of the applicant inputted by the image input unit and contents of description on the passport printed with the printing unit onto passport paper previously prepared and also has the passport obtained by printing issued with the issuing unit (23);
the first center (5) verifies the data inputted by the data input unit according to a request for verification of the applicant for the passport from the passport transaction apparatus to the first database (52) by way of communication with the communication unit and returns a reply according to a result of verification as to whether the applicant passport is true or not; and
the second center (6) verifies the data inputted by the data input unit according to a request from the passport transaction apparatus by way of communicating with the communication unit to the second database (62) and returns a reply according to a result of verification as to whether the applied passport is to be issued or not.

20. A passport transaction apparatus according to claim 18 or claim 19; wherein said image input unit (14) and communication unit (22) are connected to each other, and said control unit (17) transfers the image inputted by the image input unit via said communication unit to the center.

21. A passport transaction apparatus according to any one of claims 18 to 20; wherein said passport transaction apparatus further comprises an voice input unit (13) for inputting a voice and a voice outputting unit (11) for outputting a voice, and said communication unit (22) transfers the voice inputted with the voice input unit to the center (6) and also outputs the voice transferred from the center to the voice outputting unit.

22. A passport transaction apparatus according to any one of claims 18 to 21; wherein said passport transaction apparatus further comprises a direct payment unit (20) for processing a charge for passport application with cash, and said control unit (17) controls receipt of cash and changes by controlling processing by the direct payment unit.

23. A passport transaction apparatus according to any one of claims 18 to 22; wherein said passport transaction apparatus further comprises an indirect payment unit (18b) connected with the communication unit (22) via a communication line to a center of a financial institution (3, 4) for processing a charge for passport application through communication between the communication unit and the financial institution, and the control unit (17) controls procedure for payment to and from the financial institution by controlling the processing by the indirect payment unit.

## Patentansprüche

1. Ein Passtransaktionsgerät (1A-1 bis 1A-N) zum Verarbeiten einer Passtransaktion für einen Antragsteller, welches mit einer Einwohnerdatenbank (52) verbunden ist, in der Identifikationsdaten der Einwohner gespeichert sind, und welches auch mit einer Zentrale (6) verbunden ist, die eine Prüfung für eine Ausgabe von Pässen über eine Kommunikationsleitung durchführt, wobei das Gerät umfasst:
eine Kommunikationseinheit (22) zum Kommunizieren mit der Zentrale;
eine Bildeingabeeinheit (14) zum Eingeben eines Bilds des Antragstellers für einen Pass;
eine Anzeigeeinheit (12) zum Anzeigen einer Anleitung für einen Ablauf für die Passtransaktion;
eine Dateneingabeeinheit (12) zum Eingeben von Daten für die Beantragung gemäß dem Ablauf für die Passtransaktion, der auf der Anzeigeeinheit angezeigt wird;
eine Signatureingabeeinheit (12) zum Eingeben einer Signatur des Antragstellers; und
eine Steuereinheit (17) zum Übertragen der Daten, die durch jede der Eingabeeinheiten in die Zentrale eingegeben werden, indem die Kommunikationseinheit verwendet wird, und zum Orchestrieren der Zentrale, um zu bestimmen, ob der beantragte Pass auszugeben ist oder nicht, basierend auf den Identifikationsdaten für den Antragsteller, welche in der Einwohnerdatenbank aufgezeichnet wurden, und auf allen übertragenen Eingabedaten.

2. Ein Passtransaktionsgerät nach Anspruch 1, wobei
die Kommunikationseinheit (22) ferner mit der Einwohnerdatenbank (52) kommuniziert, und
die Steuereinheit (17) die Daten, welche durch jede der Eingabeeinheiten (12) eingegeben werden, und die Identifikationsdaten des Antragsstellers, welche mittels der Kommunikationseinheit abgerufen werden, an die Zentrale überträgt, indem die Kommunikationseinheit verwendet wird, und die Zentrale so orchestriert, um zu bestimmen, ob der Pass auszugeben ist oder nicht, basierend auf den übertragenen Daten.

3. Ein Passtransaktionsgerät nach Anspruch 1, des Weiteren umfassend:
eine Druckereinheit (21) zum Drucken des Bilds, das durch die Bildeingabeeinheit eingegeben wird, und von Inhalten des Passes auf ein Passpapier, das vorher vorbereitet wurde; und
eine Ausgabeeinheit (23) zum Ausgeben eines Passes, der durch Drucken mit der Druckereinheit erhalten wird;
wobei die Steuereinheit (17) die Kommunikationen durch die Kommunikationseinheit (22), die Bildeingabe durch die Bildeingabeeinheit (14), die Anzeige durch die Anzeigeeinheit (12), die Dateneingabe durch die Dateneingabeeinheit (12) und die Ausgabe eines Passes durch die Ausgabeeinheit steuert, und
die Daten, die durch jede der Eingabeeinheiten (12) eingegeben werden, an die Zentrale (6) sendet, indem die Kommunikationseinheit (22) verwendet wird, und die zentrale so orchestriert, um zu bestimmen, ob der Pass auszugeben ist oder nicht, und wenn bestimmt wird, dass der Pass auszugeben ist, die Druckereinheit (21) veranlasst, das Bild des Antragsstellers, das durch die Bildeinheit (14) eingegeben wurde, und Inhalte des Passes auf ein Passpapier zu drucken, das vorher vorbereitet wurde, und die Ausgabeeinheit (23) veranlasst, den Pass auszugeben, der durch Drukken erhalten wird.

4. Ein Passtransaktionsgerät nach Anspruch 1, des Weiteren umfassend:
ein Speichermedium (52, 62), welches die Daten, die zum Ausgeben von Pässen erforderlich sind, und die Daten zum Identifizieren der Antragsteller für die Pässe speichert;
eine Leseeinheit (17) zum Auslesen der Daten aus dem Speichermedium;
eine Druckereinheit (21) zum Drucken eines Bilds, das durch die Bildeingabeeinheit (14) eingegeben wird, und der Inhalte des Passes auf ein Passpapier, das vorher vorbereitet wurde; und
eine Ausgabeeinheit (23) zum Ausgeben eines Passes, der durch Drucken mit der Druckereinheit erhalten wird,
wobei die Steuereinheit die Kommunikationen durch die Kommunikationseinheit, die Bildeingabe durch die Bildeingabeeinheit, die Anzeige durch die Anzeigeeinheit, das Lesen durch die Leseeinheit, die Dateneingabe durch die Dateneingabeeinheit und die Ausgabe eines Passes durch die Ausgabeeinheit steuert, und
bestimmt, ob der beantragte Pass auszugeben ist oder nicht, basierend auf den Daten, die durch die Leseeinheit (18a) ausgelesen werden, und, wenn bestimmt wird, dass der Pass auszugeben ist, das Antragstellerbild, das durch die Bildeingabeeinheit (14) eingegeben wird, und Inhalte des Passes, die auf ein vorher vorbereitetes Passpapier gedruckt wurden, druckt, indem die Druckereinheit verwendet wird, und den Pass ausgibt, der durch Drucken erhalten wird, indem die Ausgabeeinheit (23) verwendet wird.

5. Ein Passtransaktionsgerät nach einem der vorhergehenden Ansprüche, des Weiteren umfassend eine Passdateneingabeeinheit (12) zum Eingeben der Inhalte eines ausgegebenen Passes als Daten; wobei die Steuereinheit (17), wenn ein Pass wieder ausgegeben wird, die Anzeigeeinheit (12) und die Dateneingabeeinheit so orchestriert, um die Daten, die zum Beantragen des Passes erforderlich sind, von Daten zu ändern, die von der Passdateneingabeeinheit (12) eingegeben wurden.

6. Ein Passtransaktionsgerät nach Anspruch 5, wobei die Passdateneingabeeinheit (12) das Bild eines ausgegebenen Passes liest und die Zeichen im gelesenen Bild erkennt, um die Daten einzugeben.

7. Ein Passtransaktionsgerät nach einem der vorhergehenden Ansprüche, des Weiteren umfassend:
eine Belegausgabeeinheit (19) zum Ausgeben von Belegautorisierungsdaten, um einen Antragsteller zu überprüfen, wenn ein Pass an den Antragsteller ausgegeben wird; und
eine Speichereinheit (16), um darin Autorisierungsdaten zu speichern, die auf den Beleg gedruckt werden, der von der Belegausgabeeinheit ausgegeben wird; wobei die Steuereinheit (17) eine Bestimmung durchführt, wenn die Autorisierungsdaten durch die Dateneingabeeinheit (12) eingegeben werden, ob der beantragte Pass auszugeben ist oder nicht, indem die Autorisierung der Speichereinheit verifiziert wird, und wenn bestimmt wird, dass der beantragte Pass auszugeben ist, das Bild des Antragstellers, das durch die Bildeingabeeinheit (14) eingegeben wird, und Inhalte des Passes auf ein Passpapier druckt, das vorher vorbereitet wurde, indem die Druckereinheit (21) verwendet wird, und den Pass, der durch das Drucken erhalten wird, mittels der Ausgabeeinheit (23) ausgibt.

8. Ein Passtransaktionsgerät nach einem der vorhergehenden Ansprüche, wobei die Bildeingabeeinheit (14) eine Digitalkamera ist.

9. Ein Passtransaktionsgerät nach einem der vorhergehenden Ansprüche, des Weiteren umfassend eine Sprachausgabeeinheit (11) zum Bereitstellen einer Anleitung für den Ablauf der Passtransaktion mit Sprache; wobei die Steuereinheit (17) Meldungen, die vorher vorbereitet wurden, mit Sprache ausgibt, gemäß einem Fortschritt des Ablaufs der Passtransaktion, indem die Sprachausgabeeinheit gesteuert wird.

10. Ein Passtransaktionsgerät nach einem der vorhergehenden Ansprüche, wobei die Anzeigeeinheit (12) eine Anzeigeeinheit basierend auf einem integrierten berührungssensitiven Bildschirmsystem ist.

11. Ein Passtransaktionsgerät nach einem der vorhergehenden Ansprüche, des Weiteren umfassend:
eine Direktzahlungseinheit (20) zum Zahlen einer Gebühr für eine Passbeantragung mit Bargeld; wobei die Steuereinheit (17) eine Eingabe von Bargeld und Wechselgeld steuert, indem Operationen der Direktzahlungseinheit gesteuert werden.

12. Ein Passtransaktionsgerät nach einem der vorhergehenden Ansprüche, wobei die Kommunikationseinheit (22) mit einer Zentrale eines Finanzinstituts (3, 4) verbunden ist, wobei das Gerät ferner eine Indirektzahlungseinheit (18b) umfasst, die mit einer Zentrale eines Finanzinstituts verbunden ist, um eine Gebühr für eine Passbeantragung durch eine Kommunikation zwischen der Kommunikationseinheit (22) und dem Finanzinstitut zu verarbeiten, und wobei die Steuereinheit (17) eine Zahlung bei dem Finanzinstitut durch Steuern von Operationen der Indirektzahlungseinheit steuert.

13. Ein Passtransaktionsgerät nach einem der vorhergehenden Ansprüche, wobei die Steuereinheit (17), wenn ein Zertifikat für einen Antragsteller ausgegeben wird, Daten zum Ausgeben einer Zertifizierung für den Antragsteller mit der Kommunikationseinheit (22) aus der Zentrale (6) ausliest, und das Zertifikat basierend auf den ausgelesenen Daten mittels der Druckereinheit (21) druckt.

14. Ein Passtransaktionsgerät nach einem der vorhergehenden Ansprüche, wobei die Daceneingabeeinheit (12) eine Dateneingabe aus einem Speichermedium durchführt, welches darin Daten speichert, die für die Passtransaktion erforderlich sind.

15. Ein Passtransaktionsgerät nach Anspruch 4 oder nach einem der Ansprüche 5 bis 14, wenn sie als vom Anspruch 4 abhängig gelesen werden; wobei das Speichermedium (15) eine IC-Karte ist.

16. Ein Passtransaktionsverfahren zum Verarbeiten einer Passtransaktion für einen Antragsteller, welches mit einer Einwohnerdatenbank (52) verbunden ist, in der Identifikationsdaten der Einwohner gespeichert sind, und auch mit einer Zentrale (6) verbunden ist, welche eine Prüfung für eine Ausgabe von Pässen über eine Kommunikationsleitung durchführt, wobei das Verfahren umfasst:
Kommunizieren mit der Zentrale;
Eingeben eines Bilds des Antragstellers für einen Pass;
Anzeigen einer Anleitung für einen Transaktionsablauf;
Eingeben von Daten für die Beantragung gemäß dem Ablauf für die Passtransaktion, der auf der Anzeigeeinheit angezeigt wird;
Eingeben einer Signatur des Antragstellers; und
Übertragen der Daten, die durch jede der Eingabeeinheiten in die Zentrale eingegeben werden, indem die Kommunikationseinheit verwendet wird, und Orchestrieren der zentrale, um zu bestimmen, ob der beantragte Pass auszugeben ist oder nicht, basierend auf den Identifikationsdaten für den Antragsteller, welche in der Einwohnerdatenbank aufgezeichnet wurden, und auf allen übertragenen Eingabedaten.

17. Ein Passtransaktionsverfahren nach Anspruch 16, des Weiteren umfassend:
Kommunizieren mit der Einwohnerdatenbank (52); und
Übertragen der Daten, die durch jede der Eingabeeinheiten (12) eingegeben werden, und der Identifikationsdaten des Antragstellers, die mittels der Kommunikationseinheit abgerufen werden, an die Zentrale, indem die Kommunikationseinheit verwendet wird, und Orchestrieren der Zentrale, um zu bestimmen, ob der Pass auszugeben ist oder nicht, basierend auf den übertragenen Daten.

18. Ein Passtransaktionsgerät nach Anspruch 3, wobei sich das Passtransaktionsgerät über eine Kommunikationsleitung mit einer Zentrale (6) verbindet, die zugänglich mit einer ersten Datenbank (52) verbunden ist, welche darin Daten zum Ausgeben von Zertifikaten an Antragsteller speichert, wobei Daten zur Ausgabe von Pässen in einer zweiten Datenbank (62) registriert werden, und wobei eine Prüfung zur Ausgabe von Pässen durchgeführt wird, wobei
die Steuereinheit (17) mittels der Kommunikationseinheit (22) auf die Zentrale (6) zugreift, die Zentrale auffordert eine Bestimmung durchzuführen, ob der beantragte Pass auszugeben ist oder nicht, gemäß den Daten, die durch die Dateneingabeeinheit (18a) eingegeben werden, und, wenn bestimmt wird, dass der beantragte Pass auszugeben ist, ein Bild des Antragsteller, welches durch die Bildeingabeeinheit (14) eingegeben wird, und Beschreibungsinhalte des Passes auf einem Passpapier besitzt, das vorher vorbereitet wurde, wobei der Pass, der durch Drucken erhalten wird, mit der Ausgabeeinheit (21) ausgegeben wird; und wobei die Zentrale die Daten verifiziert, die durch die Dateneingabeeinheit eingegeben werden, gemäß einer Anforderung von dem Passtransaktionsgerät an die erste beziehungsweise zweite Datenbank, durch eine Kommunikation mit der Kommunikationseinheit, und eine Antwort, ob jeder beantragte Pass auszugeben ist oder nicht, gemäß einem Verifikationsergebnis zurücksendet.

19. Ein Passtransaktionsgerät nach Anspruch 3, wobei sich das Passtransaktionsgerät über eine Kommunikationsleitung mit einer ersten Zentrale (5) verbindet, die eine erste Datenbank (52) mit Daten besitzt, die zur Ausgabe von Zertifikaten für Antragsteller erforderlich sind, welche darin registriert sind, und mit einer zweiten Zentrale (6) zum Registrieren von Daten zur Ausgabe von Pässen in einer zweiten Datenbank (62) und auch zum Durchführen einer Prüfung für eine Ausgabe von Pässen, und wobei
die Steuereinheit (17) mittels der Kommunikationseinheit (22) auf die erste beziehungsweise die zweite Zentrale zugreift, den Antragsteller für den Pass gemäß den Daten verifiziert, die mit der Dateneingabeeinheit (12) eingegeben werden, bestimmt, ob der beantragte Pass auszugeben ist oder nicht, und wenn bestimmt wird, dass der beantragte Pass auszugeben ist, das Bild des Antragstellers, das durch die Bildeingabeeinheit eingegeben wird, und Beschreibungsinhalte auf dem Pass besitzt, welche mit der Druckereinheit auf Passpapier gedruckt werden, das vorher vorbereitet wurde, und auch den Pass besitzt, der durch Drucken erhalten wird und mit der Ausgabeeinheit (23) ausgegeben wird;
die erste Zentrale (5) die Daten verifiziert, die durch die Dateneingabeeinheit gemäß einer Anforderung zur Verifizierung des Antragsstellers für den Pass von dem Passtransaktionsgerät in die erste Datenbank (52) durch Kommunikation mit der Kommunikationseinheit eingegeben werden, und eine Antwort gemäß einem Verifikationsergebnis zurück sendet, ob der Pass des Antragsstellers echt ist oder nicht; und
die zweite Zentrale (6) die Daten verifiziert, die durch die Dateneingabeeinheit gemäß einer Anforderung vom Passtransaktionsgerät durch Kommunikation mit der Kommunikationseinheit in die zweite Datenbank (62) eingegeben werden, und eine Antwort gemäß einem Verifikationsergebnis zurück sendet, ob der beantragte Pass auszugeben ist oder nicht.

20. Ein Passtransaktionsgerät nach Anspruch 18 oder Anspruch 19, wobei die Bildeingabeeinheit (14) und die Kommunikationseinheit (22) miteinander verbunden sind, und die Steuereinheit (17) das Bild, das durch die Bildeingabeeinheit eingegeben wird, über die Kommunikationseinheit zur Zentrale überträgt.

21. Ein Passtransaktionsgerät nach einem der Ansprüche 18 bis 20, wobei das Passtransaktionsgerat des Weiteren eine Spracheingabeeinheit (13) zum Eingeben einer Sprache und eine Sprachausgabeeinheit (11) zum Ausgeben einer Sprache umfasst, und wobei die Kommunikationseinheit (22) die Sprache überträgt, die mit der Spracheingabeeinheit in die Zentrale (6) eingegeben wird, und auch die Sprache ausgibt, die von der Zentrale zur Sprachausgabeeinheit übertragen wird.

22. Ein Passtransaktionsgerät nach einem der Ansprüche 18 bis 21, wobei das Passtransaktionsgerät des Weiteren eine Direktzahlungseinheit (20) zum Verarbeiten einer Gebühr für eine Passbeantragung mit Bargeld umfasst, und wobei die Steuereinheit (17) einen Empfang von Bargeld und Wechselgeld steuert, indem die Verarbeitung durch die Direktzahlungseinheit gesteuert wird.

23. Ein Passtransaktionsgerät nach einem der Ansprüche 18 bis 22, wobei das Passtransaktionsgerät des Weiteren eine Indirektzahlungseinheit (18b) umfasst, die mit der Kommunikationseinheit (22) über eine Kommunikationsleitung mit einer Zentrale eines Finanzinstituts (3, 4) verbunden ist, zum Verarbeiten einer Gebühr für eine Passbeantragung durch eine Kommunikation zwischen der Kommunikationseinheit und dem Finanzinstitut, und wobei die Steuereinheit (17) einen Zahlungsablauf an und von dem Finanzinstitut steuert, indem die Verarbeitung durch die Indirektzahlungseinheit gesteuert wird.

## Revendications

1. Appareil de fabrication de passeport (1A-1 à 1A-N) destiné à traiter une fabrication de passeport d'un demandeur, relié à une base de données de résidents (52) stockant des données d'identification des résidents et également relié à une centrale (6) qui exécute un examen pour la délivrance de passeports par le biais d'une ligne de communication, ledit appareil comprenant :
une unité de communication (22) destinée à communiquer avec ladite centrale ;
une unité d'entrée d'image (14) destinée à entrer une image du demandeur de passeport ;
une unité d'affichage (12) destinée à afficher un guide pour une procédure de fabrication de passeport;
une unité d'entrée de données (12) destinée à entrer des données de la demande selon la procédure de la fabrication de passeport affichée sur ladite unité d'affichage ;
une unité d'entrée de signature (12) destinée à entrer une signature du demandeur ; et
une unité de contrôle (17) destinée à transmettre les données entrées par chacune desdites unités d'entrée à ladite centrale en utilisant ladite unité de communication et à orchestrer ladite centrale de manière à déterminer si le passeport demandé est à délivrer ou non sur la base des données d'identification du demandeur qui a été enregistré dans ladite base de données de résidents et de chacune des données d'entrée transmises.

2. Appareil de fabrication de passeport selon la revendication 1, dans lequel :
l'unité de communication (22) communique en outre avec ladite base de données de résidents (52), et
l'unité de contrôle (17) transmet les données entrées par chacune desdites unités d'entrée (12) et les données d'identification du demandeur extraites en utilisant ladite unité de communication à ladite centrale en utilisant ladite unité de communication et orchestre ladite centrale de manière à déterminer si le passeport est à délivrer ou non sur la base des données transmises.

3. Appareil de fabrication de passeport selon la revendication 1, comprenant en outre :
une unité d'impression (21) destinée à imprimer l'image entrée par l'unité d'entrée d'image et le contenu du passeport sur un papier de passeport préparé à l'avance; et
une unité de délivrance (23) destinée à délivrer un passeport obtenu par impression à l'aide de ladite unité d'impression,
dans lequel ladite unité de contrôle (17) contrôle les communications par ladite unité de communication (22), l'entrée d'image par ladite unité d'entrée d'image (14), l'affichage par ladite unité d'affichage (12), l'entrée de données par ladite unité d'entrée de données (12) et la délivrance d'un passeport par ladite unité de délivrance, et
envoie les données entrées par chacune desdites unités d'entrée (12) à ladite centrale (6) en utilisant ladite unité de communication (22) et orchestre ladite centrale de manière à déterminer si le passeport est à délivrer ou non, lorsqu'on détermine que le passeport est à délivrer, amène l'unité d'impression (21) à imprimer l'image du demandeur entrée par ladite unité d'image (14) et le contenu du passeport sur un papier de passeport préparé à l'avance, et amène l'unité de délivrance (23) à délivrer le passeport obtenu par impression.

4. Appareil de fabrication de passeport selon la revendication 1, comprenant en outre :
un support de stockage (52, 62) stockant les données nécessaires pour la délivrance de passeports et les données servant à identifier les demandeurs des passeports ;
une unité de lecture (17) destinée à lire les données depuis ledit support de stockage ;
une unité d'impression (21) destinée à imprimer une image entrée par ladite unité d'entrée d'image (14) et le contenu du passeport sur un papier de passeport préparé à l'avance ; et
une unité de délivrance (23) destinée à délivrer un passeport obtenu par impression à l'aide de ladite unité d'impression,
dans lequel ladite unité de contrôle contrôle les communications par ladite unité de communication, l'entrée d'image par ladite unité d'entrée d'image, l'affichage par ladite unité d'affichage, la lecture par ladite unité de lecture, l'entrée de données par ladite unité d'entrée de données et la délivrance d'un passeport par ladite unité de délivrance, et
détermine si le passeport demandé est à délivrer ou non sur la base des données lues par ladite unité de lecture (18a), et lorsqu'on détermine que le passeport est à délivrer, imprime l'image du demandeur entrée par ladite unité d'image (14) et le contenu du passeport sur un papier de passeport préparé à l'avance en utilisant l'unité d'impression, et délivre le passeport obtenu par impression en utilisant l'unité de délivrance (23).

5. Appareil de fabrication de passeport selon l'une quelconque des revendications précédentes, comprenant en outre une unité d'entrée de données de passeport (12) destinée à entrer le contenu d'un passeport délivré sous forme de données ; dans lequel ladite unité de contrôle (17) orchestre, lors d'une nouvelle délivrance d'un passeport, ladite unité d'affichage (12) et ladite unité d'entrée de données de manière à amender les données nécessaires à la demande du passeport de données entrées depuis ladite unité d'entrée de données de passeport (12).

6. Appareil de fabrication de passeport selon la revendication 5, dans lequel ladite unité d'entrée de données de passeport (12) lit l'image d'un passeport délivré et reconnaît les caractères dans l'image lue afin d'entrer les données.

7. Appareil de fabrication de passeport selon l'une quelconque des revendications précédentes, comprenant en outre :
une unité de délivrance de reçu (19) destinée à délivrer des données d'autorisation de reçu pour vérifier un demandeur lorsqu'un passeport est délivré au demandeur ; et
une unité de stockage (16) destinée à stocker des données d'autorisation imprimées sur le reçu délivré par l'unité de délivrance de reçu ; dans lequel ladite unité de contrôle (17) effectue une détermination, lorsque les données d'autorisation sont entrées par l'unité d'entrée de données (12), afin de savoir si le passeport demandé est à délivrer ou non en vérifiant l'autorisation auprès de l'unité de stockage, et lorsqu'on détermine que le passeport demandé est à délivrer, imprime l'image du demandeur entrée par ladite unité d'entrée d'image (14) et le contenu du passeport sur un papier de passeport préparé à l'avance en utilisant l'unité d'impression (21) et délivre le passeport obtenu par impression en utilisant ladite unité de délivrance (23).

8. Appareil de fabrication de passeport selon l'une quelconque des revendications précédentes, dans lequel ladite unité d'entrée d'image (14) est un appareil photo numérique.

9. Appareil de fabrication de passeport selon l'une quelconque des revendications précédentes, comprenant en outre une unité de sortie de voix (11) destinée à guider la procédure de fabrication de passeport avec voix ; dans lequel ladite unité de contrôle (17) sort des messages préparés à l'avance avec de la voix selon les progrès de la procédure de fabrication de passeport en contrôlant ladite unité de sortie de voix.

10. Appareil de fabrication de passeport selon l'une quelconque des revendications précédentes, dans lequel ladite unité d'affichage (12) est une unité d'affichage basée sur un système à panneau d'affichage intégré.

11. Appareil de fabrication de passeport selon l'une quelconque des revendications précédentes, comprenant en outre :
une unité de paiement direct (20) pour le paiement en espèces d'une taxe de demande de passeport ; dans lequel ladite unité de contrôle (17) contrôle l'entrée d'espèces et de monnaie en contrôlant les opérations de ladite unité de paiement direct.

12. Appareil de fabrication de passeport selon l'une quelconque des revendications précédentes, dans lequel ladite unité de communication (22) est reliée à une centrale d'un établissement financier (3, 4), ledit appareil comprend en outre une unité de paiement indirect (18b) reliée à une centrale d'un établissement financier pour traiter une taxe de demande de passeport par le biais d'une communication entre ladite unité de communication (22) et ledit établissement financier, et ladite unité de contrôle (17) contrôle le paiement avec l'établissement financier en contrôlant les opérations de ladite unité de paiement indirect.

13. Appareil de fabrication de passeport selon l'une quelconque des revendications précédentes, dans lequel ladite unité de contrôle (17) lit, lors de la délivrance d'un certificat pour un demandeur, des données pour délivrer un certificat pour le demandeur depuis la centrale (6) avec l'unité de communication (22), et imprime le certificat sur la base des données lues en utilisant ladite unité d'impression (21).

14. Appareil de fabrication de passeport selon l'une quelconque des revendications précédentes, dans lequel ladite unité d'entrée de données (12) exécute une entrée de données depuis un support de stockage stockant des données nécessaires pour la fabrication de passeport.

15. Appareil de fabrication de passeport selon la revendication 4 ou l'une quelconque des revendications 5 à 14, lues en tant qu'annexe à la revendication 4, dans lequel ledit support de stockage (15) est une carte CI.

16. Procédé de fabrication de passeport consistant à traiter une fabrication de passeport d'un demandeur, relié à une base de données de résidents (52) stockant des données d'identification des résidents et également relié à une centrale (6) qui exécute un examen pour la délivrance de passeports par le biais d'une ligne de communication, ledit procédé comprenant :
la communication avec ladite centrale ;
l'entrée d'une image du demandeur de passeport ;
l'affichage d'un guide pour une procédure de fabrication ;
l'entrée de données de la demande selon la procédure de la fabrication de passeport affichée sur ladite unité d'affichage ;
l'entrée de la signature du demandeur ; et
la transmission des données entrées par chacune desdites unités d'entrée à ladite centrale en utilisant ladite unité de communication et l'orchestration de ladite centrale de manière à déterminer si le passeport demandé est à délivrer ou non sur la base des données d'identification du demandeur qui a été enregistré dans ladite base de données de résidents et de chacune des données d'entrée transmises.

17. Procédé de fabrication de passeport selon la revendication 16, comprenant en outre :
la communication avec la base de données de résidents (52) ; et
la transmission des données entrées par chacune desdites unités d'entrée (12) et des données d'identification du demandeur extraites en utilisant ladite unité de communication à ladite centrale en utilisant ladite unité de communication et l'orchestration de ladite centrale de manière à déterminer si le passeport est à délivrer ou non sur la base des données transmises.

18. Appareil de fabrication de passeport selon la revendication 3, dans lequel l'appareil de transaction de passeport est relié via une ligne de communication à une centrale (6) reliée de manière accessible à une première base de données (52) stockant des données pour la délivrance de certificats à des demandeurs, enregistrant des données pour la délivrance de passeports dans une deuxième base de données (62) et exécuter un examen pour la délivrance de passeports et, dans lequel
l'unité de contrôle (17) accède à la centrale (6) en utilisant l'unité de communication (22), demande à la centrale de déterminer si le passeport demandé est à délivrer ou non selon les données entrées par l'unité d'entrée de données (18a), et lorsqu'on détermine que le passeport demandé est à délivrer, a une image du demandeur entrée par l'unité d'entrée d'image (14) et le contenu de description du passeport que un papier de passeport préparé à l'avance et le passeport obtenu par impression délivré par l'unité de délivrance (21) ; et la centrale vérifie les données entrées par l'unité d'entrée de données selon une demande en provenance de l'appareil de transaction de passeport aux première et deuxième bases de données respectivement par le biais d'une communication avec l'unité de communication et renvoie une réponse concernant le fait de savoir si chaque passeport demandé est à délivrer ou non selon un résultat de vérification,

19. Appareil de fabrication de passeport selon la revendication 3, dans lequel l'appareil de fabrication de passeport est relié via une ligne de communication à une première centrale (5) ayant une première base de données (52) avec des données nécessaires à la délivrance de certificats de demandeurs qui y sont enregistrés et une deuxième centrale (6) destinée à enregistrer des données pour la délivrance de passeports dans une deuxième base de données (62) et également à exécuter l'examen pour la délivrance de passeports, et dans lequel
l'unité de contrôle (17) accède respectivement aux première et deuxième centrales en utilisant l'unité de communication (22), vérifie le demandeur du passeport en fonction des données entrées avec l'unité d'entrée de données (12), détermine si le passeport demandé est à délivrer ou non, et lorsqu'on détermine que le passeport demandé est à délivrer, a l'image du demandeur entrée par l'unité d'entrée d'image et le contenu de description du passeport imprimés par l'unité d'impression sur du papier de passeport préparé à l'avance et a également le passeport obtenu par impression délivré par l'unité de délivrance (23) ;
la première centrale (5) vérifie les données entrées par l'unité d'entrée de données selon une demande de vérification du demandeur du passeport depuis l'appareil de fabrication de passeport vers la première base de données (52) par le biais d'une communication avec l'unité de communication et renvoie une réponse en fonction du résultat de vérification indiquant si le passeport du demandeur est vrai ou non ; et
la deuxième centrale (6) vérifie les données entrées par l'unité d'entrée de données selon une demande provenant de l'appareil de fabrication de passeport par le biais d'une communication avec l'unité de communication vers la deuxième base de données (62) et renvoie une réponse en fonction d'un résultat de vérification indiquant si le passeport demandé est à délivrer ou non.

20. Appareil de fabrication de passeport selon la revendication 18 ou la revendication 19, dans lequel ladite unité d'entrée d'image (14) et ladite unité de communication (22) sont reliées l'une à l'autre, et ladite unité de contrôle (17) transfère l'image entrée par l'unité d'entrée d'image via ladite unité de communication jusqu'à la centrale.

21. Appareil de fabrication de passeport selon l'une quelconque des revendications 18 à 20, dans lequel ledit appareil de fabrication de passeport comprend en outre une unité d'entrée vocale (13) destinée à entrer une voix et une unité de sortie de voix (11) destinée à sortir une voix, et ladite unité de communication (22) transfère la voix entrée par l'unité d'entrée de voix vers la centrale (6) et sort également la voix transférée depuis la centrale vers l'unité de sortie de voix.

22. Appareil de fabrication de passeport selon l'une quelconque des revendications 18 à 21, dans lequel ledit appareil de fabrication de passeport comprend en outre une unité de paiement direct (20) destinée à traiter une taxe de demande de passeport en espèces, et ladite unité de contrôle (17) contrôle la réception d'espèces et de monnaies en contrôlant le traitement par l'unité de paiement direct.

23. Appareil de fabrication de passeport selon l'une quelconque des revendications 18 à 22, dans lequel ledit appareil de fabrication de passeport comprend en outre une unité de paiement indirect (18b) reliée à l'unité de communication (22) via une ligne de communication à une centrale d'un établissement financier (3, 4) pour traiter une taxe de demande de passeport par le biais d'une communication entre l'unité de communication et l'établissement financier, et l'unité de contrôle (17) contrôle la procédure de paiement vers et depuis l'établissement financier en contrôlant le traitement par l'unité de paiement indirect.
